# EUROPEAN PATENT APPLICATION

(11) **EP 4 679 219 A2**
(43) Date of publication of application: **14.01.2026**
(21) Application number: 25186418.7
(22) Date of filing: 30.06.2025
(51) Int. Cl.: G05D 1/242, A01B 69/00, G05D 1/622, G05D 1/81, G05D 1/85, G05D 105/15, G05D 107/20, G05D 109/10

(54) **AUTOMATIC TRAVELING METHOD, AUTOMATIC TRAVELING PROGRAM, AND AUTOMATIC TRAVELING SYSTEM**

(30) Priority: 10.07.2024 JP 2024110846
(71) Applicant: Yanmar Holdings Co., Ltd., Osaka-shi, Osaka (JP)
(72) Inventor: NISHIBEPPU, Shinya, Okayama (JP); MURAYAMA, Masaaki, Okayama (JP); NISHII, Yasuto, Okayama (JP); IWAMURA, Keisuke, Okayama (JP)
(74) Representative: Sekiguchi, Kazuya

(57) **Abstract**

[Problem] Provided are an automatic traveling method, an automatic traveling program, and an automatic traveling system capable of causing a work vehicle having an obstacle detection function to automatically travel without reducing work efficiency while ensuring safety.

[Solution] An automatic traveling system 1 includes a setting processing portion 512 for setting the function of an obstacle sensor 54 that detects a detection target around a work vehicle 10 to be enabled or disabled, and traveling processing portion 111 that, when the function of the obstacle sensor 54 is set to be disabled, enables the automatic traveling if a predetermined condition related to the operator is satisfied, and prohibits the automatic traveling if the predetermined condition related to the operator is not satisfied.

## Description

### TECHNICAL FIELD

The present invention relates to a technique for causing a work vehicle having a function of detecting an obstacle to travel automatically.

### BACKGROUND ART

Conventionally, there is known a technique that causes a work vehicle to automatically travel in a work area according to a target route that has been set in advance. In addition, a technique is also known, in which a distance to a detection target present in a traveling direction of the work vehicle is measured to determine whether the detection target is an obstacle or not, and a collision avoidance control for avoiding collision with the obstacle is performed when the obstacle is present within a predetermined detection range with respect to the work vehicle (for example, refer to Patent Document 1).

### PRIOR ART DOCUMENT

### PATENT DOCUMENT

Patent Document 1: Japanese Patent Laid-open Publication No. 2021-65115

### SUMMARY OF INVENTION

### TECHNICAL PROBLEM

A detection unit such as an obstacle sensor may detect, as an obstacle, a detection target that does not affect traveling of a work vehicle, such as dust. When such a detection target is detected as an obstacle, the work vehicle stops automatic traveling, decelerates, or performs avoidance traveling, and thus work efficiency is reduced. Therefore, it is conceivable to disable a function of the detection unit (obstacle detection function). However, when the obstacle detection function is disabled, there arises a problem that safety is lowered.

An object of the present invention is to provide an automatic traveling method, an automatic traveling program, and an automatic traveling system capable of causing a work vehicle having an obstacle detection function to automatically travel without reducing work efficiency while ensuring safety.

### SOLUTION TO PROBLEM

An automatic traveling method according to the present invention is a method for causing a work vehicle to automatically travel in a work area according to a target route. The automatic traveling method includes: setting a function of a detection unit that detects a detection target around the work vehicle to be enabled or disabled; and when the function of the detection unit is set to be disabled, enabling automatic traveling if a predetermined condition related to an operator is satisfied, and prohibiting automatic traveling if the predetermined condition related to the operator is not satisfied.

An automatic traveling program according to the present invention is a program for causing a work vehicle to automatically travel in a work area according to a target route. The automatic traveling program is a program for causing one or more processors to set a function of a detection unit that detects a detection target around the work vehicle to be enabled or disabled; and when the function of the detection unit is set to be disabled, enable automatic traveling if a predetermined condition related to an operator is satisfied, and prohibit automatic traveling if the predetermined condition related to the operator is not satisfied.

An automatic traveling system according to the present invention is a system for causing a work vehicle to automatically travel in a work area according to a target route. The automatic traveling system includes: a setting processing portion that sets a function of a detection unit that detects a detection target around the work vehicle to be enabled or disabled; and a traveling processing portion that when the function of the detection unit is set to be disabled, enables automatic traveling if a predetermined condition related to an operator is satisfied, and prohibits automatic traveling if the predetermined condition related to the operator is not satisfied.

### ADVANTAGEOUS EFFECTS OF INVENTION

According to the present invention, it is possible to provide an automatic traveling method, an automatic traveling program, and an automatic traveling system capable of causing a work vehicle having an obstacle detection function to automatically travel without reducing work efficiency while ensuring safety.

### BRIEF DESCRIPTION OF DRAWINGS

FIG. 1 is a block diagram illustrating a configuration of an automatic traveling system according to an embodiment of the present invention;
FIG. 2 is an external view illustrating an example of a work vehicle according to an embodiment of the present invention;
FIG. 3 is a diagram illustrating an example of a field and a target route according to an embodiment of the present invention;
FIG. 4 is a diagram illustrating a specific example of a vehicle control range of an obstacle sensor according to an embodiment of the present disclosure;
FIG. 5 is a diagram illustrating an example of a mode selection screen displayed on an operation terminal according to an embodiment of the present invention;
FIG. 6 is a diagram illustrating an example of an operation screen displayed on the operation terminal according to an embodiment of the present invention;
FIG. 7 is a diagram illustrating an example of the operation screen displayed on the operation terminal according to an embodiment of the present invention;
FIG. 8 is a diagram illustrating an example of a sensor selection screen displayed on the operation terminal according to an embodiment of the present invention;
FIG. 9 is a diagram illustrating an example of a warning screen displayed on the operation terminal according to an embodiment of the present invention;
FIG. 10 is a diagram illustrating an example of the sensor selection screen displayed on the operation terminal according to an embodiment of the present invention;
FIG. 11 is a diagram illustrating an example of the sensor selection screen displayed on the operation terminal according to an embodiment of the present invention;
FIG. 12 is a diagram illustrating an example of a start condition screen displayed on the operation terminal according to an embodiment of the present invention;
FIG. 13 is a diagram illustrating an example of the start condition screen displayed on the operation terminal according to an embodiment of the present invention;
FIG. 14 is a flowchart illustrating an example of a procedure of automatic travel processing executed by an automatic traveling system according to an embodiment of the present invention;
FIG. 15 is a diagram illustrating an example of the sensor selection screen displayed on the operation terminal according to an other embodiment of the present invention;
FIG. 16 is a diagram illustrating an example of the sensor selection screen displayed on the operation terminal according to an other embodiment of the present invention;
FIG. 17 is a diagram illustrating an example of the sensor selection screen displayed on the operation terminal according to an other embodiment of the present invention;
FIG. 18 is a diagram illustrating an example of a warning screen displayed on the operation terminal according to an other embodiment of the present disclosure;
FIG. 19 is a diagram illustrating an example of a start terminal selection screen displayed on the operation terminal according to an other embodiment of the present invention; and
FIG. 20 is a diagram illustrating an example of a warning screen displayed on the operation terminal according to an other embodiment of the present disclosure.

### DESCRIPTION OF EMBODIMENTS

The following embodiments are merely embodied examples of the present invention, and do not limit the technical scope of the present invention.

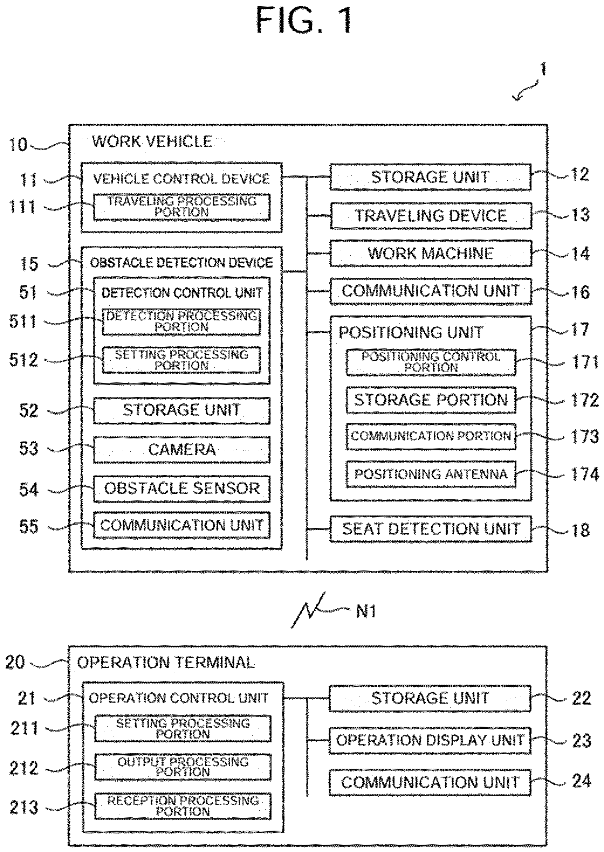

As illustrated in FIG. 1, an automatic traveling system 1 according to an embodiment of the present invention includes a work vehicles 10 and an operation terminal 20. The work vehicle 10 and the operation terminal 20 can communicate with each other via a communication network N1. For example, the work vehicle 10 and the operation terminal 20 can communicate with each other via a mobile phone network, a packet network, or a wireless LAN.

In the present embodiment, a case where the work vehicle 10 is a tractor will be described as an example. As an other embodiment, the work vehicle 10 may be a planting machine, a combine, a construction machine, a snow removal vehicle, or the like. The work vehicle 10 has a configuration enabling automatic traveling (autonomous traveling) in a field registered in advance. For example, an operator registers a field as a work target, and sets a travel route (target route) along which the work vehicle 10 automatically travels in the field. The work vehicle 10 automatically travels according to the target route set in advance in the field on the basis of position information on a current position of the work vehicle 10 calculated by a positioning unit 17. In addition, the work vehicle 10 can also perform a predetermined work while automatically traveling in a field.

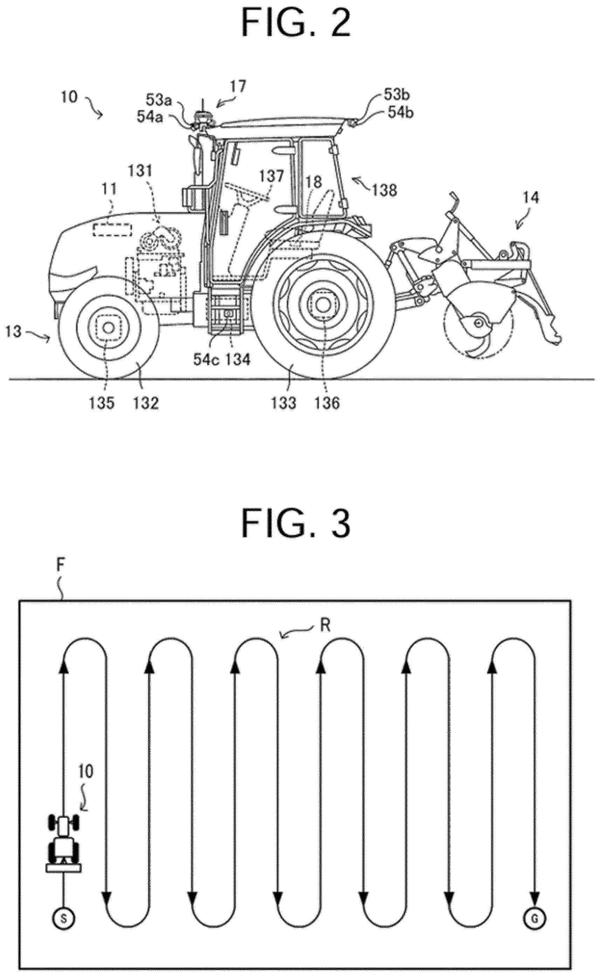

For example, the work vehicle 10 automatically travels according to a target route R in a filed F illustrated in FIG. 3. Specifically, the work vehicle 10 carries out work while automatically traveling according to a work route and a moving route (turning route) connecting the work route from a work start position S to a work end position G. The target route R is not limited to the route illustrated in FIG. 3 and is appropriately set according to the work content.

The work vehicle 10 can detect a detection target around the work vehicle 10 by an obstacle sensor while the work vehicle 10 is automatically traveling according to the target route R. When the work vehicle 10 determines that the detected detection target is an obstacle, the work vehicle 10 stops (temporarily stops) the automatic traveling, decelerates, or performs avoidance traveling. Since the work vehicle 10 has the obstacle detection function as described above, safety during automatic traveling can be ensured. However, the obstacle sensor may detect, as an obstacle, a detection target such as dust that does not affect traveling of the work vehicle 10. When such a detection target is detected as an obstacle, the work efficiency of the work vehicle 10 is reduced. Further, when the obstacle detection function is disabled, there is a problem in that safety is lowered. In contrast, as described below, the automatic traveling system 1 according to the present embodiment has a configuration capable of causing the work vehicle 10 having an obstacle detection function to automatically travel without reducing work efficiency while ensuring safety.

### Work vehicle 10

As illustrated in FIGs. 1 and 2, the work vehicle 10 includes a vehicle control device 11, a storage unit 12, a traveling device 13, a work machine 14, an obstacle detection device 15, a communication unit 16, a positioning unit 17, and a seat detection unit 18. The vehicle control device 11 is electrically connected to the storage unit 12, the traveling device 13, the work machine 14, the obstacle detection device 15, the positioning unit 17, the seat detection unit 18, and the like. Note that the vehicle control device 11 and the obstacle detection device 15 may be capable of wirelessly communicating with each other, and the vehicle control device 11 and the positioning unit 17 may be capable of wirelessly communicating with each other.

The communication unit 16 is a communication interface that connects the work vehicle 10 to the communication network N1 in a wired or wireless manner, and is for executing data communication according to a predetermined communication protocol with external devices (the operation terminal 20, a remote controller, or the like) via the communication network N1.

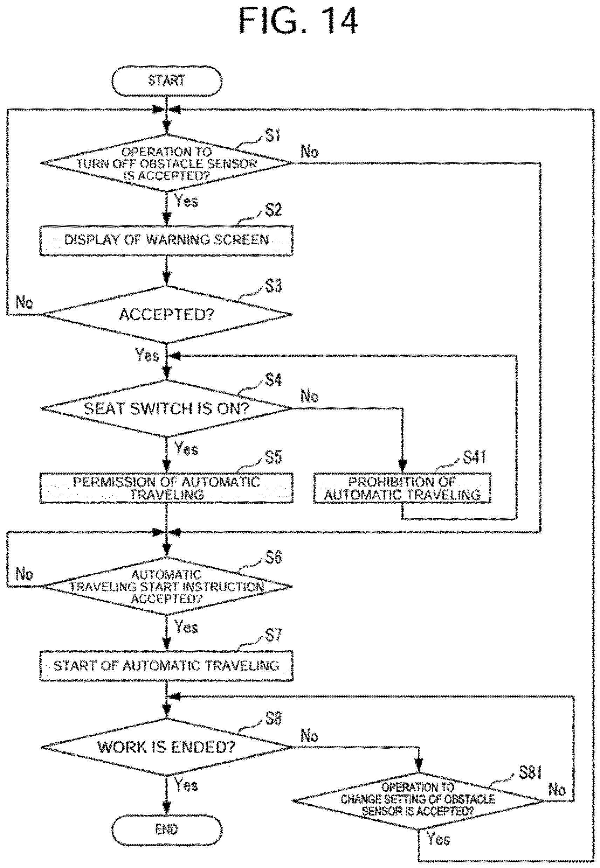

The storage unit 12 is a non-volatile storage unit such as a hard disk drive (HDD), a solid state drive (SSD), or a flash memory that stores various kinds of information. The storage unit 12 stores a control program such as an automatic traveling program to cause the vehicle control device 11 to execute the automatic travel processing which will be described later (see FIG. 14). For example, the automatic traveling program is non-transitorily recorded on a computer-readable recording medium such as a compact disc (CD) or a digital versatile disc (DVD), and read by a predetermined reading device (not illustrated) for storage in the storage unit 12. The automatic traveling program may be downloaded from a server (not illustrated) to the work vehicle 10 through the communication network N1 and stored in the storage unit 12. In addition, data related to the target route and the like is stored in the storage unit 12.

The traveling device 13 is a drive unit that causes the work vehicle 10 to travel. As illustrated in FIG. 2, the traveling device 13 includes an engine 131, front wheels 132, rear wheels 133, a transmission 134, a front axle 135, a rear axle 136, and a steering wheel 137. Note that the front wheels 132 and the rear wheels 133 are provided on both sides of the work vehicle 10. Furthermore, the traveling device 13 is not limited to a wheel-type device that includes the front wheels 132 and the rear wheels 133, and may be a crawler-type device including crawlers provided on the left and right of the work vehicle 10.

The engine 131 is a drive source such as a diesel engine or a gasoline engine driven by using fuel supplied to a fuel tank (not shown). The traveling device 13 may include an electric motor as a drive source in addition to the engine 131, or instead of the engine 131. Note that an electric generator (not illustrated) is connected to the engine 131, and electric power is supplied from the electric generator to electric components provided in the work vehicle 10, such as the vehicle control device 11, the obstacle detection device 15, and the positioning unit 17, and a battery and the like. The battery is charged by the electric power supplied from the electric generator. Further, the electric components provided in the work vehicle 10, such as the vehicle control device 11, the obstacle detection device 15, and the positioning unit 17 can be driven by electric power from the battery even after the engine 131 is stopped.

The drive force of the engine 131 is transmitted to the front wheels 132 via the transmission 134 and the front axle 135, and transmitted to the rear wheels 133 via the transmission 134 and the rear axle 136. Moreover, the driving force of the engine 131 is transmitted to the work machine 14 via a PTO shaft (not illustrated). When the work vehicle 10 automatically travels, the traveling device 13 performs a traveling operation according to a command from the vehicle control device 11. The traveling device 13 decelerates or stops the work vehicle 10 in accordance with the commands from the vehicle control device 11.

The work machine 14 is, for example, a cultivator, a mower, a plow, a fertilizer applicator, a sprayer (chemical dispersion machine), a puddling machine, or a seeding machine, and can be detachably mounted on the work vehicle 10. This allows the work vehicle 10 to perform various types of work by using various work machines 14. FIG. 2 illustrates a case in which the work machine 14 is a cultivator.

The steering wheel 137 is an operation unit that is operated by the operator, or by the vehicle control device 11. For example, in the traveling device 13, the angle of the front wheel 132 is changed by a hydraulic power steering mechanism (not illustrated) or the like according to an operation of the handle 137 operated by the vehicle control device 11, and the traveling direction of the work vehicle 10 is changed.

In addition to the steering wheel 137, the traveling device 13 includes a shift lever, an accelerator, a brake, and the like (not illustrated), which are operated by the vehicle control device 11. In the traveling device 13, a gear of the transmission 134 is switched to a forward gear, a reverse gear, or the like according to an operation of the shift lever operated by the vehicle control device 11, and the traveling mode of the work vehicle 10 is switched between a forward movement and a reverse movement. In addition, the vehicle control device 11 operates the accelerator to control the rotation speed of the engine 131. In addition, the vehicle control device 11 also operates the brake to stop the rotation of the front wheels 132 and the rear wheels 133 by using an electromagnetic brake.

The positioning unit 17 is a communication device that includes a positioning control portion 171, a storage portion 172, a communication portion 173, and a positioning antenna 174. For example, as illustrated in FIG. 2, the positioning unit 17 is provided in an upper part of a driver's seat 138 (cabin) on which the operator rides. The driver's seat 138 or the cabin is an example of a maneuvering place of the present invention. The installation location of the positioning unit 17 is not limited to the upper portion of the driver's seat 138. Also, the positioning control portion 171, the storage portion 172, the communication portion 173, and the positioning antenna 174 of the positioning unit 17 may be distributed and arranged in different positions of the work vehicle 10. Note that, as mentioned above, the battery is connected to the positioning unit 17, and the positioning unit 17 can be operated even when the engine 131 is stopped. In addition, for example, as the positioning unit 17, a mobile phone terminal, a smartphone, a tablet terminal, a quantum compass, or the like, may be used instead.

The positioning control portion 171 is a computer system that includes one or more processors, and a storage memory such as a non-volatile memory and a RAM. The storage portion 172 is a non-volatile memory or the like that stores a program for causing the positioning control portion 171 to execute positioning processing, and data such as positioning information and movement information. For example, the program is non-temporarily recorded in a computer-readable recording medium such as a CD or a DVD, read by a predetermined reading device (not illustrated), and then stored in the storage portion 172. Note that the program may be downloaded from a server (not illustrated) to the positioning unit 17 via the communication network N1, and then stored in the storage portion 172.

The communication portion 173 is a communication interface that connects the positioning unit 17 to the communication network N1 in a wired or wireless manner, and is for executing data communication according to a predetermined communication protocol with an external apparatus, such as a base station server, via the communication network N1.

The positioning antenna 174 is an antenna that receives radio waves (GNSS signals) transmitted from satellites.

The positioning control portion 171 calculates the current position of the work vehicle 10 based on GNSS signals that are received from the satellites by the positioning antenna 174. For example, in a case where the work vehicle 10 automatically travels in a field, when the positioning antenna 174 receives radio waves (such as a transmission time and orbit information) transmitted from each of the plurality of satellites, the positioning control portion 171 calculates a distance between the positioning antenna 174 and each satellite, and calculates the current position (latitude and longitude) of the work vehicle 10 based on the calculated distances. Furthermore, the positioning control portion 171 may perform positioning by a real-time kinematic method (RTK-GNSS positioning method (RTK method)), in which the current position of the work vehicle 10 is calculated using correction information corresponding to a base station (reference station) close to the work vehicle 10. In this manner, the work vehicle 10 automatically travels using positioning information according to the RTK method. Note that the current position of the work vehicle 10 may be the same position as the positioning position (for example, the position of the positioning antenna 174), or may be a position that is offset from the positioning position. The positioning control portion 171 may use a quantum compass to perform calculation (positioning) of the current position of the work vehicle 10.

When the work vehicle 10 detects a detection target such as a person or an object during automatic traveling, the obstacle detection device 15 outputs measurement information to the vehicle control device 11. Specifically, the obstacle detection device 15 includes a detection control unit 51, a storage unit 52, a camera 53, an obstacle sensor 54, and a communication unit 55. The obstacle detection device 15 may be configured as a single unit and installed on the work vehicle 10, or a plurality of components may be distributed and arranged in the work vehicle 10.

The communication unit 55 is a communication interface that connects the obstacle detection device 15 to the communication network N1 in a wired or wireless manner, and is for executing data communication according to a predetermined communication protocol with an external device (such as the operation terminal 20) via the communication network N1.

The storage unit 52 is a non-volatile storage unit, such as an HDD, an SSD, or a flash memory, to store various types of information. The storage unit 52 stores a control program for causing the obstacle detection device 15 to execute a predetermined process. For example, the control program is non-transiently recorded in a computer-readable recording medium such as a CD or a DVD, is read by a predetermined reading device (not illustrated), and then stored in the storage unit 52. Note that the control program may be downloaded from a server (not illustrated) to the obstacle detection device 15 via the communication network N1, and then stored in the storage unit 52.

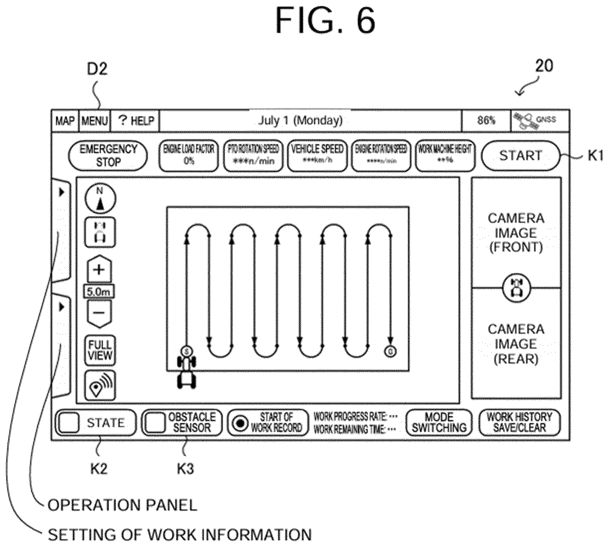

The camera 53 is a digital camera that captures an image of a subject included in a predetermined imaging range, and outputs the image as digital image data. The camera 53 continuously captures images of a subject at a predetermined frame rate, generates frame images (captured images) at a predetermined resolution, and sequentially transmits the frame images to the detection control unit 51. Furthermore, the camera 53 transmits the image data of the captured images to the operation terminal 20 via the communication unit 55. The operation terminal 20 can display the captured images on an operation screen of an operation display unit 23 (see FIG. 6 and the like).

The camera 53 includes a front camera 53a that is capable of imaging an imaging range at the front as viewed from the work vehicle 10, and a rear camera 53b that is capable of imaging an imaging range at the rear as viewed from the work vehicle 10.

As illustrated in FIG. 2, the front camera 53a is disposed on the upper front side of the driver's seat 138, and the rear camera 53b is disposed on the upper rear side of the driver's seat 138. The camera 53 may include a left-side camera capable of imaging an imaging range on the left side as viewed from the work vehicle 10 and a right-side camera capable of imaging an imaging range on the right side as viewed from the work vehicle 10. In addition, the camera 53 may be configured by a single camera, and may be an omnidirectional camera that is capable of capturing images in all directions around the work vehicle 10.

The obstacle sensor 54 is a sensor that detects a detection target in a predetermined detection range using infrared rays, ultrasonic waves, or the like. For example, the obstacle sensor 54 may be a lidar sensor (distance sensor) capable of three-dimensionally measuring the distances to a detection target using a laser, or a sonar sensor including a plurality of sonars that are capable of measuring the distance to a detection target using ultrasonic waves. The obstacle sensor 54 is installed on a front center portion, a rear center portion, central left and right portions, or the like of the work vehicle 10, and detects obstacles by monitoring the surroundings of the work vehicle 10. In the present embodiment, the obstacle sensor 54 includes a front obstacle sensor 54a capable of detecting a detection target in a detection range on the front side as viewed from the work machine 10, a rear obstacle sensor 54b capable of detecting a detection target in a detection range on the rear side as viewed from the work machine 10, a left obstacle sensor 54c capable of detecting a detection target in a detection range on the left side as viewed from the work machine 10, and a right obstacle sensor (not illustrated) capable of detecting a detection target in a detection range on the right side as viewed from the work machine 10. As illustrated in FIG. 2, the front obstacle sensor 54a is disposed on the upper front side of the driver's seat 138, the rear obstacle sensor 54b is disposed on the upper rear side of the driver's seat 138, the left obstacle sensor 54c is disposed on the lower center left side of the driver's seat 138, and the right obstacle sensor is disposed on the lower center right side of the driver's seat 138. The front obstacle sensor 54a, the rear obstacle sensor 54b, the left obstacle sensor 54c, and the right obstacle sensor can detect A detection target in a predetermined detection range around the work machine 10. The front camera 53a and the front obstacle sensor 54a may be configured as a single unit, and the rear camera 53b and the rear obstacle sensor 54b may be configured as a single unit. Note that, the obstacle sensor 54 may include a front obstacle sensor 54a and a rear obstacle sensor 54b. The obstacle sensor 54 is an example of a detection unit of the present invention.

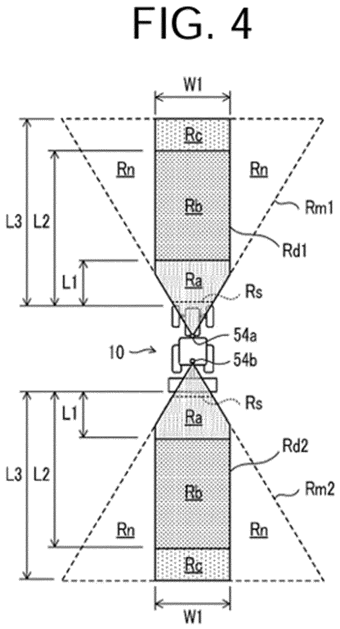

FIG. 4 illustrates an example of measurement ranges (detection ranges) of the front obstacle sensor 54a and the rear obstacle sensor 54b. Note that, hereinafter, each obstacle sensor will be referred to as an "obstacle sensor 54" in the description common to each front obstacle sensor.

The obstacle sensor 54, for example, measures the distance to each range point (measurement target) that exists in the measurement range using a laser (such as an infrared laser beam), and generates a distance image or the like based on the measurement information. The obstacle sensor 54 includes an electronic control unit in which a microcontroller and the like are integrated and a processing unit which is built by various control programs and the like, and is connected to the detection control unit 51, the vehicle control device 11, and the like via a CAN in a mutual communicable manner.

As illustrated in FIG. 4, a first measurement range Rm1 forward from the driver's seat 138 is set as the measurement range (detection range) for the front obstacle sensor 54a, and a second measurement range Rm2 rearward from the driver's seat 138 is set as the measurement range (detection range) for the rear obstacle sensor 54b.

The front obstacle sensor 54a and the rear obstacle sensor 54b are disposed on a left-right center line of the work vehicle 10, in the same manner as the front camera 53a and the rear camera 53b. The front obstacle sensor 54a is disposed at an upper left-right-center position on the front end side of the driver's seat 138 with a posture being tilted down so as to look down on the front side of the work vehicle 10 from diagonally above. As a result, in the front obstacle sensor 54a, a predetermined range on the front side of the vehicle body is set to the first measurement range Rm1 so that a symmetry axis thereof coincides with the left-right center line of the work vehicle 10. The rear obstacle sensor 54b is disposed at an upper left-right-center position on the rear end side of the driver's seat 138 with a posture being tilted down so as to look down on the rear side of the work vehicle 10 from diagonally above. As a result, in the rear obstacle sensor 54b, a predetermined range on the rear side of the vehicle body is set to the second measurement range Rm2 so that a symmetry axis thereof coincides with the left-right center line of the work vehicle 10.

The front obstacle sensor 54a and the rear obstacle sensor 54b measure the respective distances from the obstacle sensors 54a and 54b to the respective ranging points inside the first measurement range Rm1 and the second measurement range Rm2, using a Time Of Flight (TOF) method in which the distance to the ranging point is measured on the basis of a round-trip time from an emission of a laser to a return of the laser reflected by the ranging point. The front obstacle sensor 54a scans the laser vertically and horizontally at high speed over the entire first measurement range Rm1 and performs a three dimensional measurement in the first measurement range Rm1 by measuring sequentially a distance to the ranging point for each scanning angles (coordinates). The front obstacle sensor 54a sequentially measures an intensity (reflection intensity) of the acquired light reflected from each of the ranging points. The front obstacle sensor 54a repeatedly measures in a real time manner a distance to each of the ranging points inside the first measurement range Rm1, each of the reflection intensities, and the like.

The rear obstacle sensor 54b scans the laser vertically and horizontally at high speed over the entire second measurement range Rm2 and performs a three dimensional measurement in the second measurement range Rm2 by measuring sequentially a distance to the ranging point for each scanning angles (coordinates). The rear obstacle sensor 54b sequentially measures an intensity (reflection intensity) of the acquired light reflected from each of the ranging points. The rear obstacle sensor 54b repeatedly measures in a real time manner a distance to each of the ranging points inside the second measurement range Rm2, each of the reflection intensities, and the like.

The front obstacle sensor 54a and the rear obstacle sensor 54b generate the distance image and extract a group of the ranging points presumed as an obstacle from the measurement information, such as the measured distances to the ranging points and the scanning angles (coordinates) with respect to the ranging points, and transmit the measurement information regarding the extracted group of the ranging points to the detection control unit 51 as the measurement information associated with the obstacle.

The front obstacle sensor 54a and the rear obstacle sensor 54b set a first vehicle control range Rd1 on the front side of the work vehicle 10 inside the obstacle detection range for the front obstacle sensor 54a and a second vehicle control range Rd2 on the rear side of the work vehicle 10 inside the obstacle detection range for the rear obstacle sensor 54b by performing a cutting process and a masking process on the first measurement range Rm1 and the second measurement range Rm2 based on the vehicle body information or the like (see FIG. 4).

In the cutting process, the front obstacle sensor 54a and the rear obstacle sensor 54b acquire the maximum left-right width of the vehicle body including the work machine 14 (the left-right width of the tiller in the present embodiment) through a communication with the vehicle control device 11, and set a vehicle control width W1 against the obstacle by adding a predetermined safety zone to the maximum left-right width of the vehicle body. Subsequently, left and right ranges outside the vehicle control width W1 inside the first measurement range Rm1 and the second measurement range Rm2 are set to non-vehicle control ranges Rn by the cutting process, and the non-vehicle control ranges Rn are excluded from the vehicle control ranges Rd1 and Rd2.

Furthermore, in the masking process, the front obstacle sensor 54a and the rear obstacle sensor 54b set non-detection ranges Rs by adding a predetermined safety zone to a range in which the front end side of the work vehicle 10 enters into the first measurement range Rm1 and a range in which the rear end side of the work machine 14 enters into the second measurement range Rm2, and the non-detection ranges Rs are excluded from the measurement ranges (detection ranges) Rm1 and Rm2.

In this way, the detection range of the detection target is set to the first measurement range Rm1 and the second measurement range Rm2, and the vehicle control range is set inside the measurement ranges Rm1 and Rm2, so that it is possible to execute a process (responding process to be described later) according to the position of the detection target in each of the measurement ranges Rm1 and Rm2 when the detection target is detected.

The information associated with the first vehicle control range Rd1, the second vehicle control range Rd2, the non-vehicle control range Rn, and the non-detection range Rs is included in the distance image mentioned above, and is transmitted to the detection control unit 51 together with the distance image.

As illustrated in FIG. 4, each of the vehicle control range Rd1 for the front obstacle sensor 54a and the vehicle control range Rd2 for the rear obstacle sensor 54b is divided into a stop control range Ra, a deceleration control range Rb, and a sounding control range Rc based on a collision determination process in which a collision prediction time is a setting time (for example, three seconds).

Specifically, the stop control range Ra is set to a range from the front obstacle sensor 54a or the rear obstacle sensor 54b to a determination reference position of the collision determination process. The deceleration control range Rb is set to a range from the determination reference position to a deceleration start position. The sounding control range Rc is set to a range from the deceleration start position to a measurement limitation position of the front obstacle sensor 54a or the rear obstacle sensor 54b. The determination reference position is set to a position away from the front end or the rear end of the vehicle body including the work machine 14 by a predetermined distance L1 (for example, 3 m) in the front-rear direction of the vehicle body. In the present embodiment, the range away from the work vehicle 10 by the distance L1 is set to the stop control range Ra, the range between the distance L1 and a distance L2 (for example, 6 m or less) is set to the deceleration control range Rb, and the range between the distance L2 and a distance L3 (for example, 9 m or less) is set to the sounding control range Rc.

Furthermore, the non-vehicle control ranges Rn of the front obstacle sensor 54a and the rear obstacle sensor 54b, that is, the range excluding the stop control range Ra, the deceleration control range Rb, and the sounding control range Rc inside the first measurement range Rm1 and the second measurement range Rm2 is set to a range where a travel control process of stopping and decelerating and a sounding process of an alarm are not performed. Furthermore, the first measurement range Rm1 and the second measurement range Rm2 are set to a range where the notification process of notifying an operator (remote monitor) that the detection target is detected is performed. In an alternative embodiment, the sounding control range Rc and the non-vehicle control range Rn may be set to a single range where the same processes (sounding process and notification process) are performed.

Note that the control ranges Ra, Rb, and Rc in the first vehicle control range Rd1 for the front obstacle sensor 54a and the second vehicle control range Rd2 for the rear obstacle sensor 54b can be set according to the type, model, work content, speed, and the like of the work vehicle 10. Furthermore, the cutting process may not be carried out on the first measurement range Rm1 for the front obstacle sensor 54a and on the second measurement range Rm2 for the rear obstacle sensor 54b.

In an alternative embodiment, in the cutting process of the first measurement range Rm1 and the second measurement range Rm2, the non-vehicle control range Rn may be set to the non-detection range where the detection target is not detected. In this case, when the detection target is detected inside the non-vehicle control range Rn, the notification process of notifying the operator that the detection target is detected is not performed. In an alternative embodiment, the operator may select whether or not to set the non-vehicle control range Rn to the non-detection range. When the non-vehicle control range Rn is set to the non-detection range, the control ranges Ra, Rb, and Rc may be set to a range where the notification process is performed in addition to the vehicle control process.

The detection control unit 51 outputs the measurement information acquired from the obstacle sensor 54 to the vehicle control device 11. The detection control unit 51 sequentially outputs the measurement information to the vehicle control device 11 each time the detection control unit 51 acquires the measurement information from the obstacle sensor 54 while the work vehicle 10 is traveling automatically. As an other embodiment, the detection control unit 51 may determine the type (such as a person, a vehicle, a structure, or materials) of a detection target (measurement target) based on the captured images acquired from the camera 53 and the measurement information acquired from the obstacle sensor 54, and output the determination result to the vehicle control device 11.

The detection control unit 51 includes control devices such as a CPU, a ROM, and a RAM. The CPU is a processor which executes various types of arithmetic processing. The ROM is a non-volatile storage unit in which control programs such as a BIOS and an OS for causing the CPU to execute various kinds of arithmetic processing are stored in advance. The RAM is a volatile or non-volatile storage unit which stores various types of information, and is used as a transitory storage memory (work area) for various types of processing executed by the CPU. The detection control unit 51 controls the obstacle detection device 15 by causing the CPU to execute various types of control programs stored in advance in the ROM or the storage unit 52.

Specifically, as shown in FIG. 1, the detection control unit 51 includes various types of processing portions, such as a detection processing portion 511 and a setting processing portion 512. Note that the obstacle detection device 15 functions as the various types of processing portions by causing the CPU to execute various types of processing according to the obstacle detection program. In addition, some or all of the processing portions may be configured by an electronic circuit. The obstacle detection program may be a program for causing the plurality of processors to function as the processing portions.

The detection processing portion 511 acquires the captured images from the camera 53 and acquires the measurement information from the obstacle sensor 54. Specifically, once the work vehicle 10 starts automatic traveling, the detection processing portion 511 successively acquires from the front camera 53a the captured images of the imaging range in the forward traveling direction while traveling automatically. The detection processing portion 511 stores the acquired captured images in the storage unit 52. Furthermore, once the work vehicle 10 starts automatic traveling, the detection processing portion 511 successively acquires from the front obstacle sensor 54a measurement information (a group of ranging points, a distance image, and the like) of the first measurement range Rm1 (see FIG. 4) in the forward traveling direction while traveling automatically. The detection processing portion 511 stores the acquired measurement information in the storage unit 52.

Furthermore, the detection processing portion 511 determines whether the detection target is located inside the vehicle control range set with the work vehicle 10 as a reference or is located outside the vehicle control range. Note that the vehicle control range refers to a range in which the work vehicle 10 is caused to execute a predetermined vehicle control process (a travel control process such as a stopping process and a decelerating process, a sounding process for issuing the alarm or the like to the outside, and the like) when the detection target is contained in the vehicle control range.

Specifically, the detection processing portion 511 determines whether the detection target is located inside the first vehicle control range Rd1 or located outside the first vehicle control range Rd1 based on the current position of the work vehicle 10 in the field F and the measurement information. Furthermore, for example, based on the current position of the work vehicle 10 and the measurement information, the detection processing portion 511 determines whether the detection target is located inside any of the stop control range Ra, the deceleration control range Rb, and the sounding control range Rc, or is located inside none of the stop control range Ra, the deceleration control range Rb, and the sounding control range Rc. Moreover, the detection processing portion 511 determines inside which of the stop control range Ra, the deceleration control range Rb, the sounding control range Rc, and the non-vehicle control range Rn the position of the detection target is.

In an alternative embodiment, the detection processing portion 511 may determine whether the detection target is located inside the first vehicle control range Rd1 or located outside the first vehicle control range Rd1 on condition that the position of the detection target is determined as inside the field F. Therefore, when the detection processing portion 511 detects the detection target X1 outside the field F, it is not necessary for the detection processing portion 511 to determine whether or not the position of the detection target X1 is located inside the first vehicle control range Rd1.

In an alternative embodiment, the detection processing portion 511 may determine the position of the detection target based on the captured image acquired from the camera 53. Furthermore, the detection processing portion 511 may determine the position of the detection target based on the captured image acquired from the camera 53 and the measurement information acquired from the obstacle sensor 54.

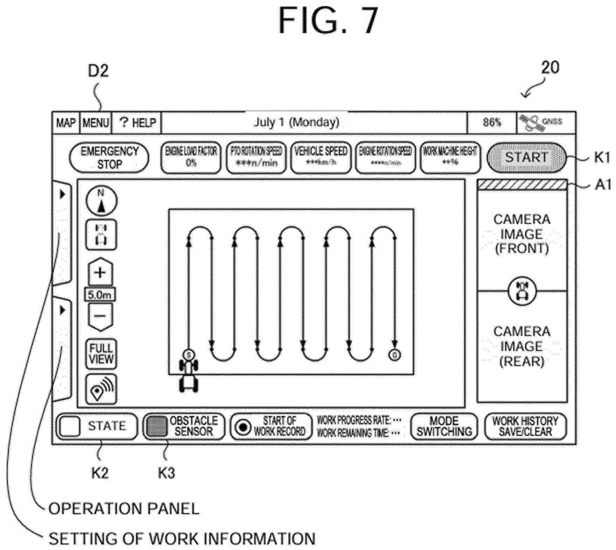

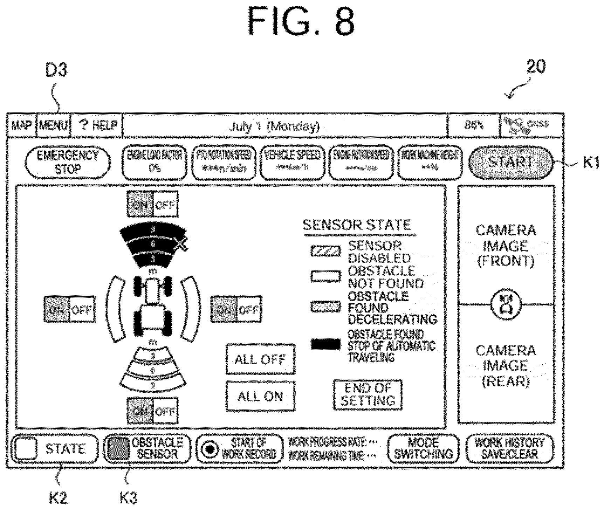

The detection processing portion 511 outputs a responding information corresponding to the result of determination to the vehicle control device 11 and the operation terminal 20. Specifically, when the detection target is detected, the detection processing portion 511 outputs (notifies) the detection information indicating that the detection target is detected to the operation terminal 20 to causes the operation terminal 20 to display the detection information (see FIGS. 7 and 8). Note that the detection processing portion 511 may transmit the detection information to the operation terminal 20 through e-mail. Furthermore, when the detection target is detected, the detection processing portion 511 outputs the vehicle control information (stopping instruction, decelerating instruction, sounding instruction, or the like) for controlling the work vehicle 10 to the vehicle control device 11 to cause the vehicle control device 11 to execute the vehicle control process (stopping process, decelerating process, sounding process, or the like). Specific examples of the display process of the detection information and the vehicle control process are described later.

The detection processing portion 511 may be configured to determine whether or not the detection target is an obstacle based on the captured image acquired from the camera 53, output the responding information to the vehicle control device 11 and the operation terminal 20 if determining that the detection target is an obstacle, and not output the responding information to the vehicle control device 11 and the operation terminal 20 if determining that the detection target is not an obstacle.

The setting processing portion 512 sets the function (obstacle detection function) of the obstacle sensor 54 to be enabled or to be disabled. Here, "enabling" the obstacle sensor 54 means that the obstacle sensor 54 emits a laser to a predetermined detection range and outputs measurement information obtained by measuring a distance to each range point (measurement target) that exists in the measurement range, or the detection processing portion 511 detects a detection target based on the measurement information. On the other hand, "disabling" the obstacle sensor 54 means that the obstacle sensor 54 does not emit a laser, that the obstacle sensor 54 emits a laser but does not output measurement information acquired by measuring the distance to each range point that exists in the measurement range, or that the detection processing portion 511 acquires measurement information from the obstacle sensor 54 but does not determine the position of the detection target.

The setting processing portion 512 sets the function of the obstacle sensor 54 to be enabled or disabled according to an operation (see FIG. 8 and the like) selected by the operator in the operation terminal 20. A method of setting the function of the obstacle sensor 54 will be described later. The setting processing portion 512 outputs setting information indicating a setting state ("enabled" or "disabled") of the function of the obstacle sensor 54 to the vehicle control device 11. The setting processing portion 512 is an example of the setting processing portion in the present invention.

The vehicle control device 11 has control devices such as a CPU, a ROM, and a RAM. The CPU is a processor which executes various types of arithmetic processing. The ROM is a non-volatile storage unit in which control programs such as a BIOS and an OS for causing the CPU to execute various kinds of arithmetic processing are stored in advance. The RAM is a volatile or non-volatile storage unit that stores various types of information, and is used as a temporary storage memory for various types of processing executed by the CPU. The vehicle control device 11 controls the work vehicle 10 by causing the CPU to execute various control programs stored in advance in the ROM or the storage unit 12.

Specifically, as illustrated in FIG. 1, the vehicle control device 11 includes various processing portions such as a traveling processing portion 111. The vehicle control device 11 causes the CPU to perform various types of processing according to the automatic traveling program to function as the various processing portions. In addition, some or all of the processing portions may be configured by an electronic circuit. The automatic traveling program may be a program for causing a plurality of processors to function as the processing portions.

The traveling processing portion 111 controls traveling of the work vehicle 10. For example, when the traveling mode of the work vehicle 10 is automatic traveling mode, the traveling processing portion 111 causes the work vehicle 10 to automatically travel based on the position information (positioning information) indicating the current position of the work vehicle 10, which is positioned by the positioning unit 17. For example, when the work vehicle 10 satisfies automatic travel start condition and a travel start instruction is acquired from the operator, the traveling processing portion 111 causes the work vehicle 10 to start performing automatic travel based on the positioning information. For example, the traveling processing portion 111 causes the work vehicle 10 to automatically travel from the work start position S to the work end position G in accordance with the target route R generated and set in advance in the operation terminal 20.

Note that, when the traveling mode of the work vehicle 10 is manual traveling mode, it is possible to make the work vehicle 10 manually travel based on operations made by the worker (manual steering). For example, the traveling processing portion 111 acquires operation information that corresponds to driving operations performed by the worker, such as steering wheel operations, speed change operations, travel direction switching operations, and braking operations, and causes the traveling device 13 to execute travel motions based on the operation information.

In addition, the traveling processing portion 111 executes a predetermined responding process when a detection target (obstacle) is detected while the work vehicle 10 is traveling automatically. Specifically, the traveling processing portion 111 executes the responding processes, such as a travel control process for controlling the travel of the work vehicle 10 and a sounding process for issuing the alarm, based on the responding information (stopping instruction, decelerating instruction, sounding instruction, and the like) output from the detection control unit 51. For example, the traveling processing portion 111 executes a sounding process when the obstacle sensor 54 detects an obstacle in the range from the 6 m to the 9 m in front of the work vehicle 10, executes a decelerating process when the obstacle sensor 54 detects an obstacle in the range from the 3 m to 6 m in front of the work vehicle 10, and executes a stopping process when the obstacle sensor 54 detects an obstacle in the range from the work vehicle 10 to 3 m in front of the work vehicle 10.

Moreover, the traveling processing portion 111 controls the travel according to instructions acquired from the operation terminal 20.

For example, when the traveling processing portion 111 acquires a travel start instruction from the operation terminal 20, the traveling processing portion 111 causes the work vehicle 10 to start automatic traveling, and when the traveling processing portion 111 acquires a travel stopping instruction from the operation terminal 20, the traveling processing portion 111 causes the work vehicle 10 to stop automatic traveling.

Further, the traveling processing portion 111 permits or prohibits the automatic traveling according to the setting state ("enabled" or "disabled") of the function of the obstacle sensor 54. Specifically, when the traveling mode is set to the automatic traveling mode (unmanned automatic traveling mode such as "robot mode"), the traveling processing portion 111 enables automatic traveling on condition that the function of the obstacle sensor 54 is set to "enabled". That is, when the traveling mode is in the unmanned automatic traveling mode, and the function of the obstacle sensor 54 is "enabled", the traveling processing portion 111 receives the travel start instruction of the operator from the operation terminal 20 and causes the work vehicle 10 to start automatic traveling.

On the other hand, when the traveling mode is set to the unmanned automatic traveling mode, and the function of the obstacle sensor 54 is set to "disabled", the traveling processing portion 111 enables the automatic traveling if the predetermined condition related to the operator is satisfied, and prohibits the automatic traveling if the predetermined condition related to the operator is not satisfied. Specifically, when the traveling mode is the unmanned automatic traveling mode, and the function of the obstacle sensor 54 is "disabled", the traveling processing portion 111 enables the automatic traveling if safety of the automatic traveling can be secured by the operator, and the traveling processing portion 111 prohibits the automatic traveling if the safety of the automatic traveling cannot be secured by the operator. As described above, the automatic traveling system 1 according to the present embodiment is designed to enable the work vehicle 10 to travel automatically when the safety of automatic traveling can be secured, even if the function of the obstacle sensor 54 is disabled.

The predetermined condition is, for example, that "the operator is in the driver's seat 138 (cabin) in the work vehicle 10". Specifically, the traveling processing portion 111 determines whether the operator is in the driver's seat 138 when the function of the obstacle sensor 54 is set to be disabled, permits reception of an automatic travel start instruction by the operator when the operator is in the driver's seat 138 and an other automatic travel start condition is satisfied, and prohibits the reception of the automatic travel start instruction by the operator when the operator is not in the driver's seat 138. For example, the traveling processing portion 111 determines whether the operator is in the driver's seat 138 based on a detection result of the seat detection unit 18. The seat detection unit 18 includes, for example, a switch and a sensor, and detects that the operator is seated on the driver's seat (chair) or leaves the driver's seat. The seat detection unit 18 outputs an ON signal to the vehicle control device 11 when the operator is seated, and outputs an OFF signal to the vehicle control device 11 when the operator leaves the seat. The traveling processing portion 111 determines that the operator is seated in the driver's seat, that is, the operator is in the driver's seat 138 when the ON signal is received from the seat detection unit 18. Further, the traveling processing portion 111 determines that the operator is not in the driver's seat 138 when the OFF signal is received from the seat detection unit 18.

Here, when the operator is in the driver's seat 138 in the work vehicle 10, the operator can visually grasp the situation around the work vehicle 10. For example, the operator can visually determine presence or absence of an obstacle. In this way, since the safety around the work vehicle 10 can be ensured when the operator is in the driver's seat 138, the traveling processing portion 111 permits automatic traveling when an other automatic travel start condition is satisfied even if the function of the obstacle sensor 54 is "disabled". On the other hand, since safety around work vehicle 10 cannot be ensured when the operator is not in driver's seat 138, traveling processing portion 111 prohibits automatic traveling when the function of obstacle sensor 54 is "disabled".

According to the above configuration, for example, even when the work vehicle 10 detects a detection target that does not affect traveling, such as dust, as an obstacle and stops automatic traveling, the operator can switch the obstacle sensor 54 to be disabled and restart automatic traveling after checking the safety of surroundings from the driver's seat 138 of the work vehicle 10. When the function of the obstacle sensor 54 is set to be enabled, the traveling processing portion 111 enables automatic traveling regardless of the predetermined condition. The traveling processing portion 111 is an example of a traveling processing portion of the present invention.

### Operation terminal 20

As illustrated in FIG. 1, the operation terminal 20 is an information processing device including an operation control unit 21, a storage unit 22, an operation display unit 23, and a communication unit 24. The operation terminal 20 may include a portable terminal such as a tablet terminal or a smartphone.

The communication unit 24 is a communication interface for connecting the operation terminal 20 to the communication network N1 in a wired or wireless manner and executing data communication according to a predetermined communication protocol with an external device such as one or more work vehicles 10 via the communication network N1.

The operation display unit 23 is a user interface that includes a display portion such as a liquid crystal display or an organic EL display that displays various types of information, and an operation portion such as a touch panel, a mouse, or a keyboard that receives an operation. The operator can perform an operation to register various types of information (work vehicle information, field information, work information, and the like to be described later) by operating the operation portion on an operation screen displayed on the display. For example, the operator performs an operation to register the field F, which is the work target, in the operation portion.

In addition, the operator can provide the travel start instruction, the travel stopping instruction, and the like to the work vehicle 10 by operating the operation portion. Furthermore, in a place away from the work vehicle 10, the operator can grasp a traveling state in which the work vehicle 10 travels automatically in a field F in accordance with a target route R by a traveling trajectory displayed on the operation terminal 20.

The storage unit 22 is a non-volatile storage unit such as an HDD or an SSD that stores various types of information. The storage unit 22 stores a control program for causing the operation control unit 21 to perform the automatic traveling process (see FIG. 14) to be described below. For example, the automatic traveling program is recorded in a non-transitory manner in a computer-readable recording medium such as a flash ROM, an EEPROM, a CD, or a DVD, and is read by a predetermined reading device (not illustrated) and stored in the storage unit 22. The automatic traveling program may be downloaded from a server (not illustrated) to the operation terminal 20 through the communication network N1 and stored in the storage unit 22.

In addition, a dedicated application for causing the work vehicle 10 to automatically travel is installed in the storage unit 22. The operation control unit 21 launches the dedicated application to perform a process of setting various types of information related to the work vehicle 10, a process of generating the target route R for the work vehicle 10, and a process of issuing an automatic traveling instruction to the work vehicle 10.

In addition, the storage unit 22 stores data such as work vehicle information, which is information on the work vehicle 10, target route information, which is information on the target route R, and the like. The work vehicle information includes information on a vehicle number, a model type, and the like for each work vehicle 10. The vehicle number is identification information on the work vehicle 10. The model type is a model type of the work vehicle 10.

In addition, the storage unit 22 may store the work vehicle information on one work vehicle 10 or may store the work vehicle information on a plurality of work vehicles 10. For example, when a certain operator owns a plurality of work vehicles 10, the work vehicle information on each work vehicle 10 is stored in the storage unit 22.

The target route information includes information such as a route name, a field name, an address, a field area, and a work time for each target route R. The route name is a route name of the target route R generated in the operation terminal 20. The field name is a name of the field F that is a work target for which the target path R is set.

The address is the address of the field F, and the field area is the area of the field F. The work time is the time it takes for the work vehicle 10 to do a work in the field F.

In addition, the storage unit 22 may store the target route information on one target route R or may store the target route information on a plurality of target routes R. For example, when a certain operator generates a plurality of target routes R for one or more fields F owned by the certain operator, the target route information on each target route R is stored in the storage unit 22. Note that one target route R may be set or a plurality of target routes R may be set for one field F.

Note that as an other embodiment, information such as the work vehicle information and the target route information may be partially or entirely stored in a server accessible from the operation terminal 20. The operator may perform an operation to register the work vehicle information and the target route information on the server (for example, a personal computer, a crowd server, or the like).

The operation control unit 21 includes control devices such as a CPU, a ROM, and a RAM. The CPU is a processor which executes various types of arithmetic processing. The ROM is a non-volatile storage unit in which control programs such as a BIOS and an OS for causing the CPU to execute various kinds of arithmetic processing are stored in advance. The RAM is a volatile or non-volatile storage unit that stores various types of information, and is used as a temporary storage memory for various types of processing executed by the CPU. The operation control unit 21 controls the operation terminal 20 by causing the CPU to execute various control programs stored in advance in the ROM or the storage unit 22.

As illustrated in FIG. 1, the operation control unit 21 includes various processing portions such as a setting processing portion 211, an output processing portion 212, and a reception processing portion 213. The operation control unit 21 functions as the various processing portions by executing various processing with the CPU in accordance with the automatic traveling program. In addition, some or all of the processing portions may be configured by an electronic circuit. The automatic traveling program may be a program for causing a plurality of processors to function as the processing portions.

The setting processing portion 211 sets information (hereinafter, referred to as work vehicle information) on the work vehicle 10, information (hereinafter, referred to as field information) on the field F, and information (hereinafter, referred to as work information) on how to specifically work. The setting processing portion 211 receives a setting operation performed by the operator on a setting screen (not illustrated) and registers each setting information.

Specifically, the setting processing portion 211 sets information such as a model of the work vehicle 10, a position at which the positioning antenna 174 is attached in the work vehicle 10, a type of the work machine 14, a size and shape of the work machine 14, a position of the work machine 14 with respect to the work vehicle 10, a traveling speed and the rotation speed of the engine during work performed by the work vehicle 10, and a traveling speed and the rotation speed of the engine during turning of the work vehicle 10, by the operator performing an operation to register the information on the operation terminal 20.

Regarding information such a position and a shape of the field F, the work start position S at which a work is started, the work end position G at which a work is finished, and a work direction, the setting processing portion 211 also sets the information by performing a registration operation on the operation terminal 20.

The information on the position and shape of the field F can be automatically acquired by, for example, the operator boarding the work vehicle 10, driving the work vehicle 10 around the perimeter of the field F once along the outer periphery of the field F, and recording the transition of the position information from the positioning antenna 174 at that time. In addition, the position and shape of the field F can also be acquired on the basis of a polygon obtained by the operator operating the operation terminal 20 to designate a plurality of points on a map in a state where the map is displayed on the operation terminal 20. The region specified by the acquired position and shape of the field F is a region (traveling region) in which the work vehicle 10 can travel.

The setting processing portion 211 is also configured in such a way that presence or absence of a cooperative work by a work vehicle 10 (unmanned tractor) and a manned work vehicle 10, the number of skips, which is the number of work routes to be skipped in a case where the work vehicle 10 turns around in a headland, a width of a headland, a width of a non-cultivated field, and the like are settable as work information.

For example, the setting processing portion 211 sets a work area in which work is actually performed in the registered field F. For example, when the operator selects the field F for which the work area is to be registered on the setting screen, the setting processing portion 211 displays a registration screen (map screen) on which the work start position S and the work end position G are registered. The operator registers the work start position S and the work end position G at arbitrary positions in the field F on the registration screen.

Based on each setting information described above, the setting processing portion 211 generates a target route R for causing the work vehicle 10 to automatically travel in the field F. On the registration screen (not illustrated), the operator registers pieces of information on the field F, the work machine 14, a turning method, a headland, a vehicle speed, the number of revolutions of the engine, and the like and then provides a route generation instruction. When acquiring the route generation instruction, the setting processing portion 211 generates the target route R based on the work start position S, the work end position G, and each of the pieces of information described above.

For example, as illustrated in FIG. 3, the setting processing portion 211 generates a target route R including the work start position S, the work route, the movement route (turning route), and the work end position G. The setting processing portion 211 registers the generated target route R in association with the field F.

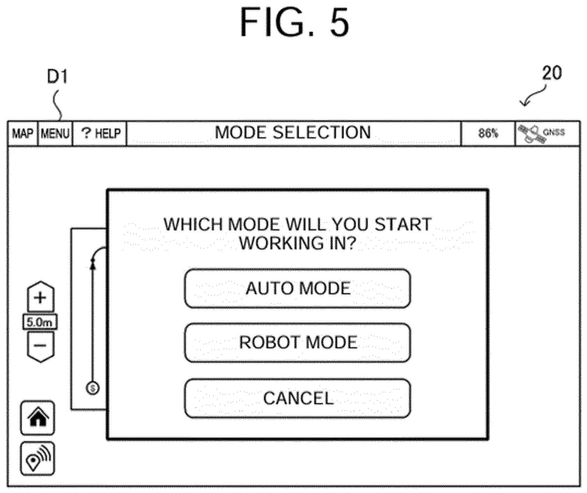

The setting processing portion 211 receives an operation of selecting the traveling mode from the operator on the mode selection screen D1 (see FIG. 5) for setting the traveling mode. The mode selection screen D1 illustrated in FIG. 5 includes an "automatic mode" and a "robot mode" as an example of the traveling mode. The "automatic mode" is a traveling mode in which the operator rides on the work vehicle 10 and causes the work vehicle 10 to automatically travel while performing a driving operation. The "robot mode" is a traveling mode in which the operator does not ride on the work vehicle 10 and causes the work vehicle 10 to travel automatically. In the "automatic mode", since the operator can grasp the surrounding situation and perform the operation, the obstacle detection function is excluded or the obstacle sensor 54 is set to be disabled. In contrast, in the "robot mode", the work vehicle 10 travels in an unmanned manner, and thus the obstacle detection function is included and the obstacle sensor 54 is set to be enabled.

The output processing portion 212 outputs each piece of setting information including the route data on the target route R, the traveling mode information to the work vehicle 10. For example, when the operator selects the field F as a work target and the work route (target route R) and gives a work start instruction, the route data on the target route R corresponding to the field F is output to the work vehicle 10.

The work vehicle 10 sets the traveling mode (for example, "automatic mode" or "robot mode") selected in the operation terminal 20. Upon receiving the route data on the target route R generated by the operation terminal 20, the work vehicle 10 stores the route data in the storage unit 12. When the work vehicle 10 satisfies the automatic travel start conditions, the operator can give a travel start instruction on the operation screen D2 (see FIG. 6). Map information, target route information, and the like are displayed on the operation screen D2. When the operator presses a start button K1, the output processing portion 212 outputs the travel start instruction to the work vehicle 10. When the automatic travel of the work vehicle 10 is started, the operation screen D2 displays a traveling situation, a captured image (camera image) of the camera 53, and the like. The operator can confirm the traveling situation, a progress situation of the work, a surrounding situation of the work vehicle 10, and the like by the operation screen D2 of the operation terminals 20.

For example, when the work vehicle 10 is automatically traveling in the robot mode (unmanned automatic traveling mode), if the obstacle detection device 15 detects the detection target as an obstacle in the stop control range Ra, the traveling processing portion 111 stops (temporarily stops) the automatic traveling of the work vehicle 10.

FIG. 7 illustrates a display example of the operation screen D2 when the work vehicle 10 detects an obstacle.

When the operation control unit 21 acquires the detection information from the obstacle detection device 15, as illustrated in FIG. 7, the operation control unit 21 displays identification information A1 indicating the position (here, the front) of the obstacle in a camera image field of the operation screen D2. In addition, the operation control unit 21 displays information indicating that the obstacle is detected in an obstacle display portion K3 on the operation screen D2. For example, the operation control unit 21 turns on the obstacle display portion K3 on the operation screen D2. In addition, the operation control unit 21 switches the start button K1 to the gray-out display and prohibits the reception of the start button K1 (the start instruction of the automatic traveling).

When the operator views the display content of the operation screen D2 illustrated in FIG. 7 and recognizes that an obstacle has been detected, the operator moves to a place where the work vehicle 10 is stopped and checks the surroundings. For example, when the detection target is a movable material or the like, the operator removes the detection target by moving the detection target. As a result, when the obstacle detection device 15 no longer detects the detection target, the traveling processing portion 111 permits the automatic traveling of the work vehicle 10. In this case, on the operation screen D2, the display of the identification information A1 is deleted, the obstacle display portion K3 is turned off, and the start button K1 is in a pressable state. When the operator presses the start button K1, the traveling processing portion 111 acquires a travel start instruction from the operation terminal 20 and causes the work vehicle 10 to resume the automatic traveling.

On the other hand, when the detection target is not a person or an object but an object that does not affect traveling, such as dust, the operator can set the obstacle detection function to be disabled so as not to hinder the work. For example, when the operator presses the obstacle display portion K3 on the operation screen D2 (see FIG. 7), the operation control unit 21 displays the sensor setting screen D3 illustrated in FIG. 8. On the sensor setting screen D3, a reception portion (ON / OFF button) for setting the function to be enabled ("ON") or disabled ("OFF") for each obstacle sensor 54 (front obstacle sensor, rear obstacle sensor, left obstacle sensor, left obstacle sensor) installed in the vehicle 10, and a reception portion (all ON button, all OFF button) for setting the functions of all the obstacle sensors 54 to be enabled ("ON") or disabled ("OFF") collectively are displayed. The operation control unit 21 receives a selection operation of the reception portion from the operator.

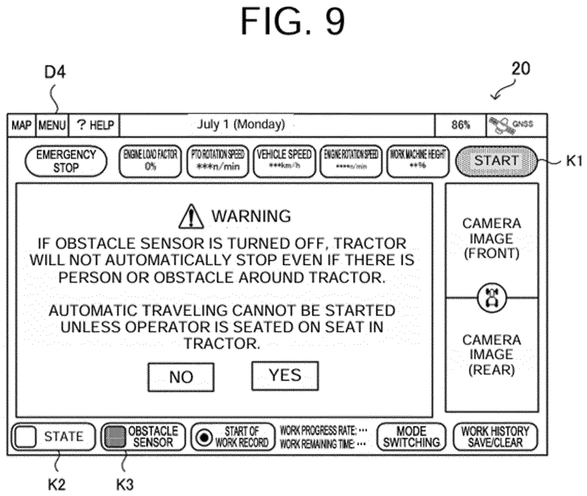

When the operator presses the "all OFF button" on the sensor setting screen D3, the reception processing portion 213 receives the selection operation, and the operation control unit 21 displays a warning screen D4 illustrated in FIG. 9. The warning screen D4 displays precautions to be taken when the function of the obstacle sensor 54 is disabled (OFF), for example, a message indicating that the work machine 10 is not automatically stopped even if there is a person or an obstacle around the work machine 10, and a message indicating that the automatic traveling cannot be started unless the operator is seated in the driver's seat 138 of the work machine 10. When the operator confirms the warning screen D4 and presses the "Yes" button, the operation control unit 21 outputs setting information for setting the function of the obstacle sensor 54 to be disabled to the work vehicle 10. When the setting information is acquired from the operation terminal 20, the setting processing portion 512 of the obstacle detection device 15 sets the function of the obstacle sensor 54 to be disabled.

When the function of the obstacle sensor 54 is set to be disabled, the traveling processing portion 111 determines whether a predetermined condition related to the operator (for example, "the operator is in the driver's seat 138") is satisfied as described above. In this manner, the operation control unit 21 displays the warning screen D4 when an operation of disabling the function of the obstacle sensor 54 is received from the operator, and receives a confirmation operation of the operator on the warning screen D4. In the work vehicle 10, when the setting processing portion 512 sets the function of the obstacle sensor 54 to be disabled, the traveling processing portion 111 determines whether the operator is in the driver's seat 138.

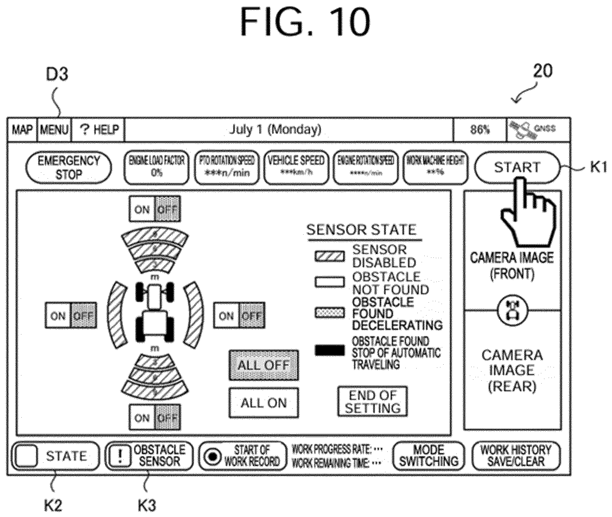

The traveling processing portion 111 enables the automatic traveling when the operator is in the driver's seat 138 (seated in the driver's seat). In this case, when an other automatic travel start condition is satisfied, for example, as illustrated in FIG. 10, the operation control unit 21 displays each ON/OFF button and the all OFF button in a selected state and displays the start button K1 in a pressable state on the sensor setting screen D3. In addition, the operation control unit 21 displays information ("!" mark) capable of identifying that the obstacle sensor 54 is disabled in the obstacle display portion K3. Accordingly, when the operator presses the start button K1, the traveling processing portion 111 acquires a travel start instruction from the operation terminal 20 and causes the work vehicle 10 to start (resume) the automatic traveling.

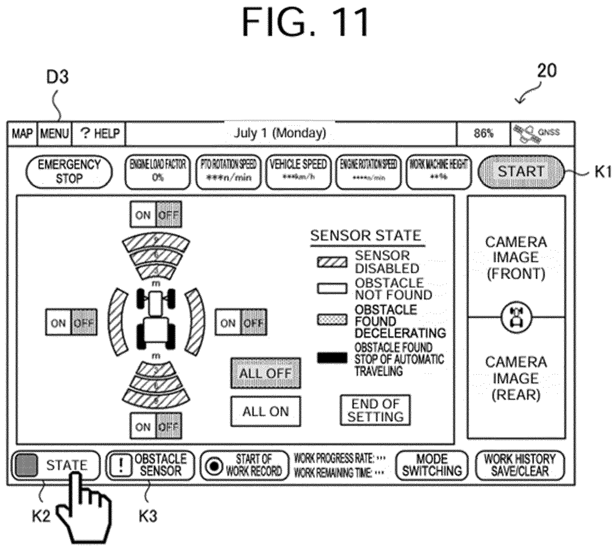

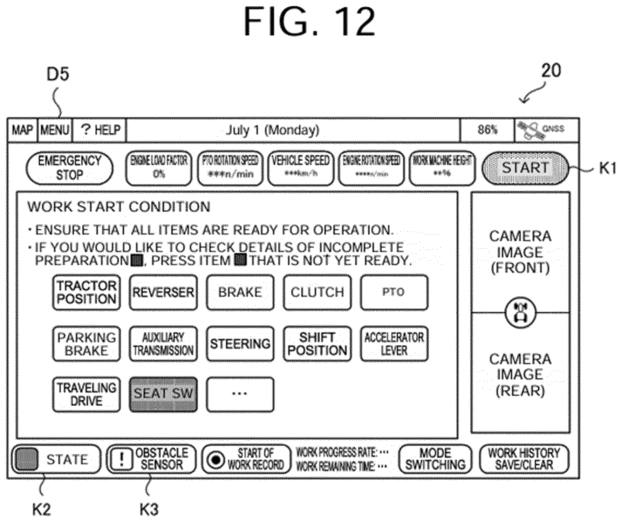

On the other hand, the traveling processing portion 111 prohibits the automatic traveling when the operator is not in the driver's seat 138 (not seated in the driver's seat). In this case, for example, as illustrated in FIG. 11, the operation control unit 21 turns on the state display portion K2 on the sensor setting screen D3. The state display portion K2 is a display field capable of identifying whether all the automatic travel start conditions are satisfied, and the operation control unit 21 turns off the state display portion K2 when all the automatic travel start conditions are satisfied, and turns on the state display portion K2 when at least one of the automatic travel start conditions is not satisfied. When the state display portion K2 is turned on, the operator can confirm the state (detailed information) of the automatic travel start condition by pressing the state display portion K2. Specifically, when the operator presses the state display portion K2, the operation control unit 21 causes a start condition screen D5 illustrated in FIG. 12 to be displayed. In the start condition screen D5, whether each item of the plurality of automatic travel start conditions is satisfied is displayed in an identifiable manner. Each item illustrated in FIG. 12 is an example of the automatic travel start condition of the present disclosure. Here, since the operator is not seated in the driver's seat 138, the item of "seat SW" is turned on. The operation control unit 21 turns on/off the seat SW based on the ON/OFF signal of the seat detection unit 18 acquired from the vehicle control device 11. Accordingly, the operator can grasp that the automatic traveling is prohibited because the operator is not seated in the driver's seat 138. In this way, when the operator is not in the driver's seat 138, the operation control unit 21 displays information indicating that the operator is not in the driver's seat 138 (lighting display of "seat SW") and information indicating that reception of an instruction to start automatic traveling is prohibited (grayed-out display of "start button K1") on the start condition screen D5.

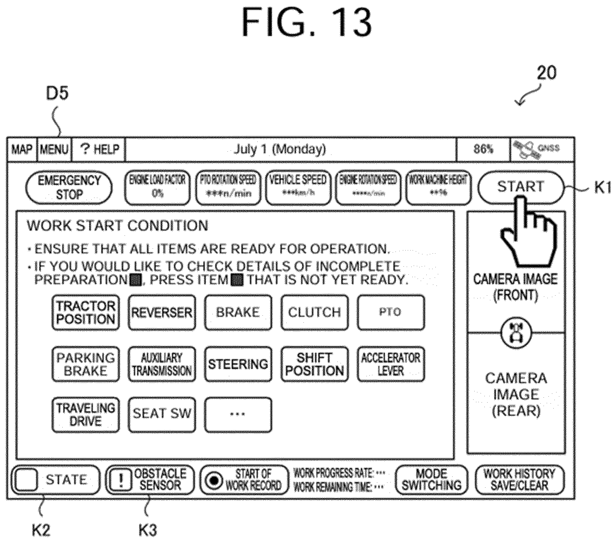

When the operator who has checked the start condition screen D5 illustrated in FIG. 12 is seated in the driver's seat, the traveling processing portion 111 receives an ON signal from the seat detection unit 18, determines that the operator is seated in the driver's seat, and enables automatic traveling. Accordingly, when all the automatic travel start conditions are satisfied, the operation control unit 21 turns off the state display portion K2 and displays the start button K1 in a pressable state on the start condition screen D5 as illustrated in FIG. 13. When the operator presses the start button K1, the traveling processing portion 111 acquires a travel start instruction from the operation terminal 20 and causes the work vehicle 10 to start (resume) the automatic traveling.

As described above, when the function of at least one of the plurality of obstacle sensors 54 is set to be disabled, the traveling processing portion 111 enables the automatic traveling when the predetermined condition is satisfied, and prohibits the automatic traveling when the predetermined condition is not satisfied.

Note that the operation terminal 20 may be capable of accessing a website of an agricultural support service (agricultural support site) provided by a server (not illustrated) via the communication network N1. In this case, the operation terminal 20 can function as a terminal for operating the server by the browser program executed by the operation control unit 21. The server includes the above-described processing portions and executes each process.

### Automatic traveling process

An example of the automatic traveling process executed by the automatic traveling system 1 will be described with reference to FIG. 14.

Note that the present invention can be interpreted as an invention of an automatic traveling method executing one or more steps involved in the automatic traveling process. In addition, one or more steps involved in the automatic traveling process described herein may be appropriately omitted. Note that the execution order of steps in the automatic traveling process may vary as long as the same operation and effect are achieved. Furthermore, although a case where the vehicle control device 11 of the work vehicle 10 and the operation control unit 21 of the operation terminal 20 execute each step in the above-mentioned automatic traveling processing is to be described here as an example, an automatic traveling method in which one or more processors execute each step in the automatic traveling processing in a distributed manner is also considered as an other embodiment.

Here, it is assumed that the automatic travel start conditions (items excluding "seat SW" illustrated in FIG. 13) other than the predetermined condition (for example, "the operator is in the driver's seat 138") are satisfied.

### Step S1

In step S1, the operation control unit 21 determines whether an operation to disable (OFF) the function of the obstacle sensor 54 has been received from the operator. Here, it is assumed that the operator sets the traveling mode to the unmanned automatic traveling mode ("robot mode") on the mode selection screen D1 (see FIG. 5). When the operation control unit 21 receives an operation to disable the function of the obstacle sensor 54 from the operator (S1: Yes), the operation control unit 21 shifts the process to step S2. On the other hand, when the operation control unit 21 does not receive an operation to disable the function of the obstacle sensor 54 or receives an operation to enable the function of the obstacle sensor 54 from the operator (S1: No), the operation control unit 21 shifts the process to step S6. For example, the operator performs an operation to disable the function for each obstacle sensor 54 or an operation to collectively disable the functions of all the obstacle sensors 54 on the sensor setting screen D3 (see FIG. 8).

### Step S2

In step S2, the operation control unit 21 displays the warning screen D4 (see FIG. 9).

That is, the operation control unit 21 displays precautions when the obstacle detection function is disabled to call the operator's attention, and inquires whether to accept the disabling of the obstacle detection function.

### Step S3

In step S3, the operation control unit 21 determines whether the operator has accepted to disable the obstacle detection function. When the operator accepts to disable the obstacle detection function, that is, when the operator presses "YES" on the warning screen D4 (see FIG. 9) (S3: Yes), the operation control unit 21 shifts the process to step S4. On the other hand, when the operator does not accept to disable the obstacle detection function, that is, when the operator presses "No" on the warning screen D4 (S3: No), the operation control unit 21 shifts the process to step S1. When the operator accepts to disable the obstacle detection function, the operation control unit 21 outputs setting information for disabling the function of the obstacle sensor 54 to the work vehicle 10. When the setting information is acquired, the vehicle control device 11 sets the function of the obstacle sensor 54 to be disabled.

### Step S4

In step S4, the vehicle control device 11 determines whether the seat switch (the seat detection unit 18) is in the ON state. That is, the vehicle control device 11 determines whether the operator is in the driver's seat 138 (whether the operator is seated in the driver's seat). When the seat switch is in the ON state (S4: Yes), the vehicle control device 11 shifts the process to step S5. On the other hand, when the seat switch is in the OFF state (S4: No), the vehicle control device 11 shifts the process to step S41.

### Step S5

In step S5, the vehicle control device 11 permits the automatic traveling of the work vehicle 10. When the vehicle control device 11 permits the automatic traveling, the operation control unit 21 displays a state in which the automatic travel start instruction can be received from the operator. For example, the operation control unit 21 displays the start button K1 in a pressable state on the sensor setting screen D3 illustrated in FIG. 10. Further, for example, the operation control unit 21 displays the start button K1 in a pressable state on the start condition screen D5 illustrated in FIG. 13. After step S5, the process then is shifted to step S6.

### Step S41

In step S41, the vehicle control device 11 prohibits the automatic traveling of the work vehicle 10.

When the vehicle control device 11 prohibits the automatic traveling, the operation control unit 21 displays a state in which the automatic travel start instruction can be received from the operator. For example, the operation control unit 21 performs gray-out display of the start button K1 on the sensor setting screen D3 illustrated in FIG. 11 and the start condition screen D5 illustrated in FIG. 12. For example, the operation control unit 21 turns on the state display portion K2 on the sensor setting screen D3 illustrated in FIG. 11 and the start condition screen D5 illustrated in FIG. 12. After step S41, the process then is shifted to step S4. The vehicle control device 11 prohibits the automatic traveling until the seat switch is turned ON.

### Step S6

In step S6, the operation control unit 21 determines whether the automatic travel start instruction has been received from the operator. If the operation control unit 21 has received the automatic travel start instruction from the operator (S6: Yes), the operation control unit 21 shifts the process to step S7. The operation control unit 21 waits until receiving the automatic travel start instruction from the operator (S6: No). When the operation control unit 21 receives the automatic travel start instruction from the operator, the operation control unit 21 outputs the automatic travel start instruction to the work vehicle 10.

### Step S7

At step S7, the vehicle control device 11 causes the work vehicle 10 to start automatic traveling.

For example, when the function of the obstacle sensor 54 is enabled (S1: No), the vehicle control device 11 causes the work vehicle 10 to automatically travel even in an unmanned state in which the operator is not present in the driver's seat 138. On the other hand, when the function of the obstacle sensor 54 is disabled (S1: Yes), the vehicle control device 11 causes the work vehicle 10 to automatically travel if the operator is present in the driver's seat 138 (S4: Yes).

The vehicle control device 11 may stop or continue automatic traveling when the operator leaves the driver's seat 138 (when the operator leaves the seat) after the automatic traveling is started while the function of the obstacle sensor 54 is set to be disabled.

### Step S8

In step S8, the vehicle control device 11 determines whether the work vehicle 10 has finished the work, that is, whether the work vehicle 10 has reached the work end position G. When the work vehicle 10 has reached the work end position G (S8: Yes), the vehicle control device 11 ends the automatic traveling process. On the other hand, when the work vehicle 10 has not reached the work end position G (S8: No), the vehicle control device 11 shifts the process to step S81.

### Step S81

In step S81, the operation control unit 21 determines whether a setting change operation for setting the function of the obstacle sensor 54 has been received. For example, when the obstacle detection device 15 detects an obstacle while the work vehicle 10 is automatically traveling and the work vehicle 10 stops automatic traveling, the operation control unit 21 determines whether an operation for switching the function of the obstacle sensor 54 from enabled to disabled has been received from the operator. The operation control unit 21 determines whether the operation for switching the function of the obstacle sensor 54 from enabled to disabled has been received from the operator.

When the setting change operation has been received (S81: Yes), the operation control unit 21 shifts the process to step S1. On the other hand, if the operation control unit 21 has not received the setting change operation (S81: No), the operation control unit 21 shifts the process to step S8.

When the setting change operation is received and the process returns to step S1, the operation control unit 21 determines whether a setting operation for disabling the function of the obstacle sensor 54 is received from the operator. When the setting operation for disabling the function of the obstacle sensor 54 is received from the operator (S1: Yes), the processes of steps S2 to S8 are performed again.

As described above, the operation control unit 21 and the vehicle control device 11 repeatedly perform the above-described processes until the work vehicle 10 ends the work.

As explained above, the automatic traveling system 1 according to this embodiment is a system that causes the work vehicle 10 to automatically travel along the target path R in field F (work area). In addition, the automatic traveling system 1 sets the function of the obstacle sensor 54 that detects a detection target around the work vehicle 10 to be enabled or disabled, and when the function of the obstacle sensor 54 is set to be disabled, the automatic traveling system 1 enables the automatic traveling if a predetermined condition related to the operator is satisfied, and prohibits the automatic traveling if the predetermined condition related to the operator is not satisfied. For example, when an other automatic travel start condition is satisfied while the operator is in the driver's seat 138 in the work vehicle 10, the automatic traveling system 1 permits the reception of the start instruction of the automatic traveling by the operator, and when the operator is not in the driver's seat 138 in the work vehicle 10, the automatic traveling system 1 prohibits the reception of the start instruction of the automatic traveling by the operator.

As described above, when the obstacle detection function is set to be disabled in the unmanned automatic traveling mode, the automatic traveling system 1 adds the presence of the operator in the driver's seat 138 to the automatic travel start conditions, and permits the start of the automatic traveling when each of the automatic travel start conditions is satisfied.

According to the above configuration, for example, when the work vehicle 10 detects a detection target that does not affect traveling, such as dust, as an obstacle, causing work to be hindered, even if the operator sets the obstacle detection function to be disabled, it is possible to cause the work vehicle 10 to resume the automatic traveling, provided that the operator is in the driver's seat 138. This allows the work vehicle 10 to travel automatically without reducing work efficiency while ensuring safety.

### Other embodiments

The present invention is not limited to the embodiment described above. Other embodiments of the present invention will be described below.

The predetermined condition of the present invention is not limited to "the operator is in the driver's seat 138 in the work vehicle 10" described above. The predetermined condition may be, for example, "the operator is remotely monitoring". For example, when the function of the obstacle sensor 54 is set to be disabled, the automatic traveling system 1 enables the automatic traveling if the operator can monitor surroundings of the work vehicle 10 by a remote monitoring terminal, and prohibits the automatic traveling if the operator cannot monitor the surroundings of the work vehicle 10 by the remote monitoring terminal. Specifically, the automatic traveling system 1 may enable the automatic traveling if a captured image (a front image, a rear image, a side image, or the like) of the camera 53 is displayed on the remote monitoring terminal (condition A), or may enable the automatic traveling if it is detected that the operator is looking at the remote monitoring terminal on which the captured image of the camera 53 is displayed (condition B). **In** addition, the automatic traveling system 1 may enable automatic traveling if at least one of the condition A and the condition B is satisfied and the operator can remotely stop the automatic traveling (for example, if a stop button for stopping automatic traveling is displayed on the remote monitoring terminal in an operable state).

According to the above configuration, for example, when the work vehicle 10 during automatic traveling detects a detection target that does not affect traveling as an obstacle and stops, the operator can disable the obstacle detection function to resume the automatic traveling after confirming the safety of surroundings by checking the camera image on the remote monitoring terminal.

In an other embodiment, the predetermined condition may require "obtaining the operator's confirmation (acceptance) of the warning, including precautions, if the obstacle detection function is disabled". For example, after the operator sets the function of the obstacle sensor 54 to be disabled, the automatic traveling may be enabled if "Yes" is pressed on the warning screen D4 illustrated in FIG. 9, or the automatic traveling may be prohibited if "No" is pressed.

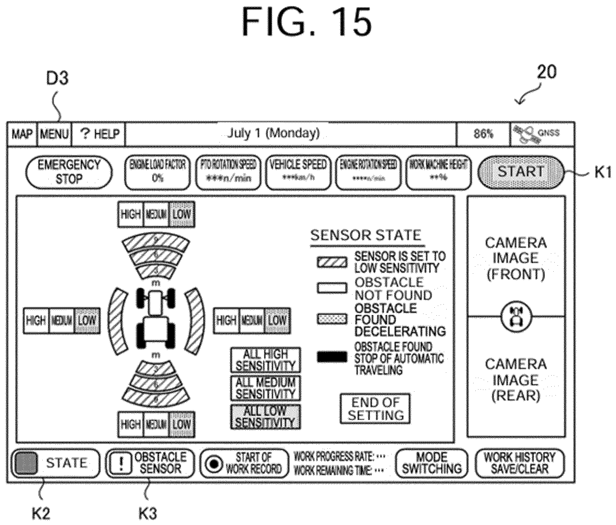

In the above-described embodiment, the operator can select "ON" or "OFF" for the function of the obstacle sensor 54 on the sensor setting screen D3 (see FIG. 8). In an other embodiment, the operation control unit 21 may be configured to adjust a sensitivity of the obstacle sensor 54 (a detection sensitivity of the detection target) on the sensor setting screen D3 as illustrated in FIG. 15. For example, the operation control unit 21 may display the sensitivity of each obstacle sensor 54 to be adjustable in three stages of "low", "medium", and "high", and the sensitivities of all the obstacle sensors 54 to be collectively adjustable. In this configuration, for example, when the sensitivity of the obstacle sensor 54 is set to the "low" sensitivity, the predetermined condition (such as "the operator is in the driver's seat 138") is added to the automatic travel start conditions, and the start of the automatic traveling is permitted when each automatic travel start condition is satisfied. When the sensitivity of the obstacle sensor 54 is set to the "medium" sensitivity or the "high" sensitivity, the predetermined condition is not added to the automatic travel start conditions, and the start of automatic travel is permitted when an other automatic travel start condition is satisfied.

Note that the sensitivity may be configured in four stages including "0" (OFF). Further, the automatic traveling system 1 may determine whether to include the predetermined condition in the automatic travel start conditions based on a reference sensitivity set by the operator. For example, when the operator sets the "medium" sensitivity as the reference sensitivity, if the sensitivity of the obstacle sensor 54 is set to the "low" sensitivity or the "medium" sensitivity, the predetermined condition is added to the automatic travel start conditions. Further, for example, when the operator sets the "0" sensitivity as the reference sensitivity, if the sensitivity of the obstacle sensor 54 is set to "0" sensitivity, the predetermined condition is added to the automatic travel start conditions.

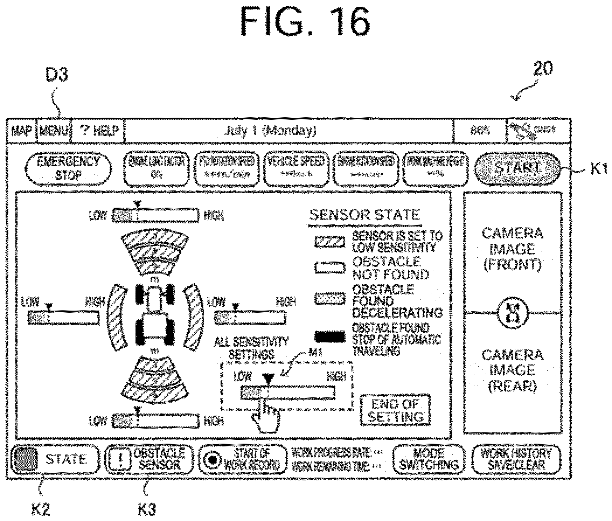

The method of setting the sensitivity is not limited to the method illustrated in FIG. 15, and the sensitivity may be set by a slide bar as illustrated in FIG. 16. In an example illustrated in FIG. 16, when the sensitivity of the obstacle sensor 54 are set to sensitivity lower than a preset reference position M1, the predetermined condition is added to the automatic travel start conditions, and the start of the automatic traveling is permitted when each of the automatic travel start conditions is satisfied. The reference position M1 may be set and changed by the operator.

That is, the automatic traveling system 1 may set the sensitivity of the obstacle sensor 54, and when the sensitivity is set to be less than a predetermined sensitivity, enable the automatic traveling if a predetermined condition related to the operator is satisfied, and prohibit the automatic traveling if the predetermined condition related to the operator is not satisfied.

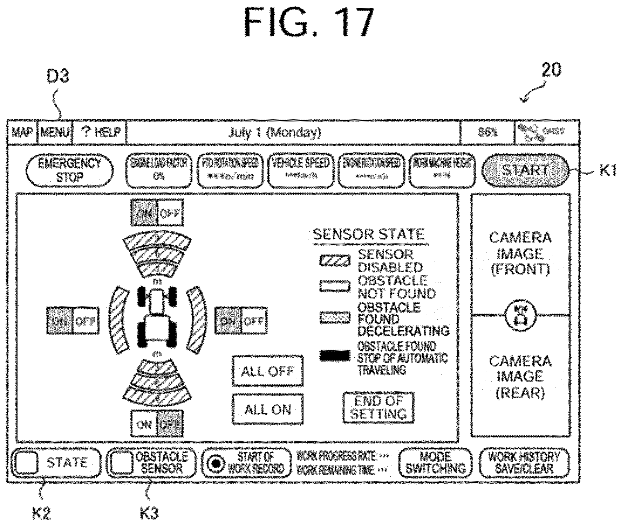

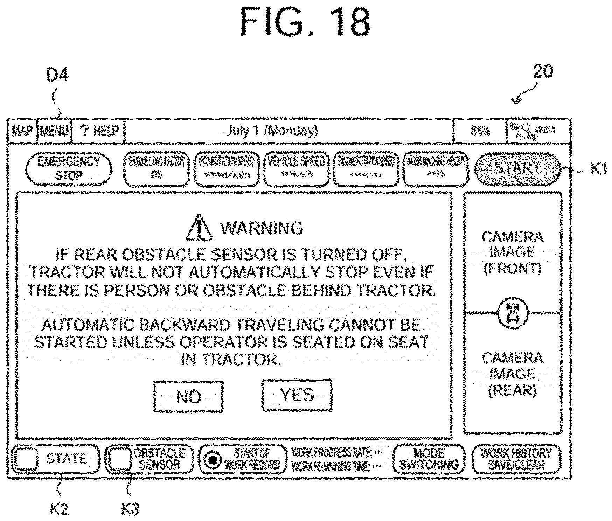

In the above-described embodiment, when at least one obstacle sensor 54 among the plurality of obstacle sensors 54 is set to be disabled, the automatic traveling system 1 adds the predetermined condition to the automatic traveling start conditions, and prohibits the automatic traveling if the predetermined condition is not satisfied. In an other embodiment, the automatic traveling system 1 may determine whether or not to permit the automatic traveling according to the setting state of the function for each obstacle sensor 54. For example, as illustrated in FIG. 17, when the operator turns OFF the rear obstacle sensor 54b and turns ON the other obstacle sensors 54, the operation control unit 21 displays, on the warning screen D4, precautions for a case where the rear obstacle sensor is disabled, as illustrated in FIG. 18. When the operator presses "Yes" on the warning screen D4, the traveling processing portion 111 adds the predetermined condition to automatic travel start conditions for the rearward automatic traveling (backward automatic traveling), and does not add the predetermined condition to the automatic travel start conditions for the forward automatic traveling (forward automatic travel). Accordingly, for example, the traveling processing portion 111 enables the backward automatic traveling if the operator is in the driver's seat 138 (seated on the driver's seat 138), and prohibits the backward automatic traveling if the operator is not in the driver's seat 138 (not seated on the driver's seat 138). In addition, the traveling processing portion 111 permits the automatic traveling regardless of whether the operator is in the driver's seat 138 in a case of the forward traveling.

As described above, when the work vehicle 10 travels in a detection direction of the obstacle sensor 54 whose function is set to be disabled among the plurality of obstacle sensors 54, the automatic traveling system 1 enables the automatic traveling if the predetermined condition is satisfied, and prohibits the automatic traveling if the predetermined condition is not satisfied. Further, when the work vehicle 10 travels in the detection direction of the obstacle sensor 54 whose function is set to be enabled among the plurality of obstacle sensors 54, the automatic traveling system 1 enables the automatic traveling regardless of the predetermined condition. That is, the automatic traveling system 1 may add the predetermined condition to the automatic traveling start conditions for traveling toward an area where the obstacle detection function is disabled.

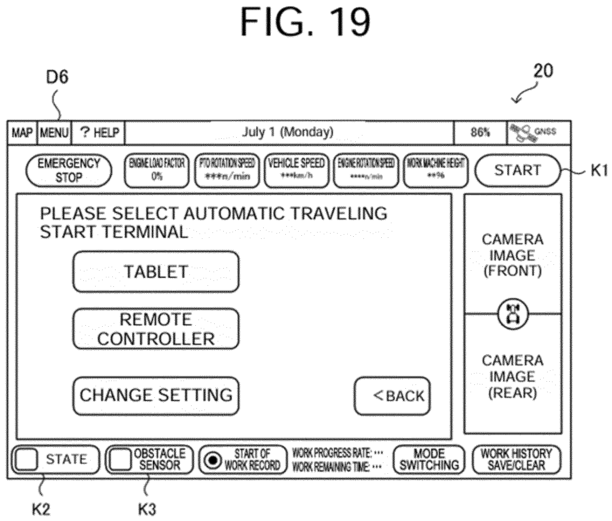

In an other embodiment, the automatic traveling system 1 may be configured such that the operator can select a terminal (automatic travel start terminal) that starts the automatic traveling. For example, as in a start terminal selection screen D6 illustrated in FIG. 19, the operation control unit 21 displays a "tablet" or a "remote controller" in a selectable manner, and receives an operation of selecting one of the "tablet" and the "remote control" from the operator. The tablet corresponds to the operation terminal 20. The remote controller is an operation tool different from the operation terminal 20, includes, for example, an automatic travel start button and a stop button (such as an emergency stop button and a temporary stop button), and can be operated within a predetermined distance from the work vehicle 10.

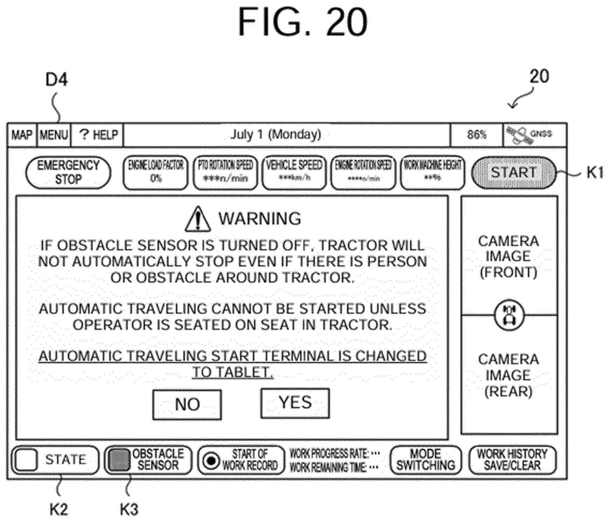

When the "remote controller" is selected as the automatic travel start terminal, the automatic traveling system 1 permits the automatic travel start operation by the remote controller if the obstacle detection function is set to be enabled. On the other hand, when the "remote controller" is selected as the automatic travel start terminal and the obstacle detection function is set to be disabled, the automatic traveling system 1 prohibits the automatic travel start operation by the remote controller and shifts the automatic travel start authority to the tablet (operation terminal 20), that is, changes the automatic travel start terminal to the tablet (operation terminal 20). In this case, when the operator sets the obstacle detection function to be disabled in a state where the "remote controller" is selected as the automatic travel start terminal, the operation control unit 21 may display a message indicating that the automatic travel start authority is changed to the tablet on the warning screen D4 as illustrated in FIG. 20. When the obstacle detection function is switched from disabled to enabled, the automatic traveling system 1 may return the automatic travel start authority to the remote controller.

Only the tablet is permitted to perform an operation of changing the setting (enabled or disabled) of the obstacle detection function, an operation of checking a state of a main body of the work vehicle 10, a setting operation related to traveling of the work vehicle 10, and the like, and these operations cannot be performed by the remote controller. In addition, since the communication distance of the tablet is shorter than that of the remote controller, it is difficult to consider a situation in which the operator gets into the work vehicle 10 with only the remote controller. Conversely, it is considered a situation in which the operator gets into the work vehicle 10 with only the tablet and a monitoring person having the remote controller is present at a distant place. In this case, if the remote controller has the automatic travel start authority, the operator who has got into the work vehicle 10 with only the tablet cannot perform the automatic travel start operation, which is troublesome. In this regard, according to the above configuration, the operator can perform the automatic travel start operation because the automatic travel start authority is changed to the tablet by setting the obstacle detection function to be disabled in the tablet.

In an other embodiment, when the obstacle detection device 15 detects an obstacle and the work vehicle 10 stops the automatic traveling, if the predetermined condition is satisfied, the traveling processing portion 111 may continue the automatic traveling while keeping the obstacle detection function in an enabled state. For example, when the obstacle detection device 15 detects an obstacle and the work vehicle 10 stops the automatic traveling, if the operator is in the driver's seat 138, the traveling processing portion 111 may continue the automatic traveling by keeping the enabled state without setting the obstacle detection function to be disabled. In this case, for example, the traveling processing portion 111 may ignore the detection result of the obstacle sensor 54 that is detecting the obstacle, enable the detection results of the other obstacle sensors 54, and continue the automatic traveling.

In the above-described embodiment, when the function of the obstacle detection device 15 is set to be disabled, the traveling processing portion 111 enables the automatic traveling if the predetermined condition related to the operator is satisfied, and prohibits the automatic traveling if the predetermined condition related to the operator is not satisfied. In an other embodiment, when the function of the obstacle detection device 15 is set to be disabled, the traveling processing portion 111 may enable the automatic travel when a predetermined condition related to the work vehicle 10 is satisfied, and may prohibit the automatic travel when the predetermined condition related to the work vehicle 10 is not satisfied. For example, when the function of the obstacle detection device 15 is set to be disabled, the traveling processing portion 111 enables the automatic traveling if the vehicle speed is less than a predetermined vehicle speed, and prohibits the automatic traveling if the vehicle speed is equal to or greater than the predetermined vehicle speed. Further, for example, when the function of the obstacle detection device 15 is set to be disabled, the traveling processing portion 111 enables the automatic traveling in a case of straight traveling, and prohibits the automatic traveling in a case of turning traveling.

In addition, for example, when the function of the obstacle detection device 15 is set to be disabled, the traveling processing portion 111 may determine whether or not the automatic traveling is possible according to the work content. That is, the predetermined condition related to the work vehicle 10 may be a condition regarding a vehicle speed, a travel route, a work content, or the like.

### Supplementary notes

The summary of the invention extracted from the embodiments is provided below as supplementary notes. Note that components and processing functions described in the following supplementary notes can be arbitrary selected and combined.

### Supplementary note 1

An automatic traveling method for causing a work vehicle to travel automatically according to a target route in a work area, the method including:
setting a function of a detection unit that detects a detection target around the work vehicle to be enabled or disabled; and
when the function of the detection unit is set to be disabled, enabling automatic traveling if a predetermined condition related to an operator is satisfied, and prohibiting the automatic traveling if the predetermined condition related to the operator is not satisfied.

### Supplementary note 2

The automatic traveling method according to Supplementary Note 1, wherein
the function of the detection unit is set to be enabled or disabled according to an operation of the operator.

### Supplementary note 3

The automatic traveling method according to Supplementary Note 1 or 2, wherein
when the function of the detection unit is set to be enabled, the automatic traveling is enabled regardless of the predetermined condition.

### Supplementary note 4

The automatic traveling method according to any one of Supplementary Notes 1 to 3, wherein
when the function of the detection unit is set to be disabled, the automatic traveling is permitted if the predetermined condition and automatic travel start conditions related to the work vehicle are satisfied.

### Supplementary note 5

The automatic traveling method according to any one of Supplementary Notes 1 to 4, wherein
the predetermined condition is that an operator is in a control location in the work vehicle.

### Supplementary note 6

The automatic traveling method according to Supplementary Note 5, wherein
when the function of the detection unit is set to be disabled, it is determined whether the operator is in the control location, and
when the operator is in the control location and an other automatic travel start condition is satisfied, acceptance of an automatic travel start instruction by the operator is permitted.

### Supplementary note 7

The automatic traveling method according to Supplementary Note 6, wherein
when the function of the detection unit is set to be disabled, a warning screen is displayed on an operation terminal of the operator, and
when a confirmation operation of the operator is received on the warning screen, it is determined whether the operator is in the control location.

### Supplementary note 8

The automatic traveling method according to Supplementary Note 6 or 7, wherein
when the operator is not in the control location, information indicating that the operator is not in the control location and information indicating that acceptance of the automatic travel start instruction is prohibited is displayed on the operation terminal of the operator.

### Supplementary note 9

The automatic traveling method according to any one of Supplementary Notes 1 to 8, wherein
the work vehicle includes a plurality of the detection units having different detection ranges from each other, and
when a function of at least one of the plurality of detection units is set to be disabled, the automatic traveling is enabled if the predetermined condition is satisfied, and the automatic traveling is prohibited if the predetermined condition is not satisfied.

### Supplementary note 10

The automatic traveling method according to any one of Supplementary Notes 1 to 9, wherein
the work vehicle includes a plurality of the detection units having different detection ranges from each other,
when the work vehicle travels in a detection direction of the detection unit whose function is set to be disabled among the plurality of detection units, the automatic traveling is enabled if the predetermined condition related to the operator is satisfied, and the automatic traveling is prohibited if the predetermined condition related to the operator is not satisfied, and
when the work vehicle travels in the detection direction of the detection unit whose function is set to be enabled among the plurality of detection units, the automatic traveling is enabled regardless of the predetermined condition.

### Supplementary note 11

An automatic traveling method for causing a work vehicle to travel automatically according to a target route in a work area, the method including:
setting a sensitivity of a detection unit that detects a detection target around the work vehicle; and
when the sensitivity of the detection unit is set to be less than a predetermined sensitivity, enabling automatic traveling if a predetermined condition related to an operator is satisfied, and
   prohibiting the automatic traveling if the predetermined condition related to the operator is not satisfied.

### REFERENCE SIGNS LIST

1 automatic traveling system
10 work vehicle
11 vehicle control device
12 storage unit
13 traveling device
14 work machine
15 obstacle detection device
16 communication unit
17 positioning unit
18 seat detection unit
20 operation terminal
21 operation control unit
24 communication unit
51 detection control unit
52 storage unit
53 camera
54 obstacle sensor (detection unit)
111 traveling processing portion
138 operation's seat (control location)
211 setting processing portion
212 output processing portion
213 reception processing portion
511 detection processing portion
512 setting processing portion
D1 mode selection screen
D2 operation screen
D3 sensor setting screen
D4 warning screen
D5 start condition screen
D6 start terminal selection screen
F field (work area)
R target route

## Claims

1. An automatic traveling method for causing a work vehicle to travel automatically according to a target route in a work area, the method comprising:
setting a function of a detection unit that detects a detection target around the work vehicle to be enabled or disabled; and
when the function of the detection unit is set to be disabled, enabling automatic traveling if a predetermined condition related to an operator is satisfied, and prohibiting the automatic traveling if the predetermined condition related to the operator is not satisfied.

2. The automatic traveling method according to claim 1, wherein
the function of the detection unit is set to be enabled or disabled according to an operation of the operator.

3. The automatic traveling method according to claim 1, wherein
when the function of the detection unit is set to be enabled, the automatic traveling is enabled regardless of the predetermined condition.

4. The automatic traveling method according to claim 1, wherein
when the function of the detection unit is set to be disabled, the automatic traveling is permitted if the predetermined condition and an automatic travel start condition related to the work vehicle are satisfied.

5. The automatic traveling method according to claim 1, wherein
the predetermined condition is that an operator is in a control location in the work vehicle.

6. The automatic traveling method according to claim 5, wherein
when the function of the detection unit is set to be disabled, it is determined whether the operator is in the control location, and
when the operator is in the control location and an other automatic travel start condition is satisfied, acceptance of an automatic travel start instruction by the operator is permitted.

7. The automatic traveling method according to claim 6, wherein
when the function of the detection unit is set to be disabled, a warning screen is displayed on an operation terminal of the operator, and
when a confirmation operation of the operator is received on the warning screen, it is determined whether the operator is in the control location.

8. The automatic traveling method according to claim 6, wherein
when the operator is not in the control location, information indicating that the operator is not in the control location and information indicating that acceptance of the automatic travel start instruction is prohibited is displayed on the operation terminal of the operator.

9. The automatic traveling method according to any one of claims 1 to 8, wherein
the work vehicle comprises a plurality of the detection units having different detection ranges from each other, and
when a function of at least one of the plurality of detection units is set to be disabled, the automatic traveling is enabled if the predetermined condition is satisfied, and the automatic traveling is prohibited if the predetermined condition is not satisfied.

10. The automatic traveling method according to any one of claims 1 to 8, wherein
the work vehicle comprises a plurality of the detection units having different detection ranges from each other,
when the work vehicle travels in a detection direction of the detection unit whose function is set to be disabled among the plurality of detection units, the automatic traveling is enabled if the predetermined condition related to the operator is satisfied, and the automatic traveling is prohibited if the predetermined condition related to the operator is not satisfied, and
when the work vehicle travels in the detection direction of the detection unit whose function is set to be enabled among the plurality of detection units, the automatic traveling is enabled regardless of the predetermined condition.

11. An automatic traveling method for causing a work vehicle to travel automatically according to a target route in a work area, the method comprising:
setting a sensitivity of a detection unit that detects a detection target around the work vehicle; and
when the sensitivity of the detection unit is set to be less than a predetermined sensitivity, enabling automatic traveling if a predetermined condition related to an operator is satisfied, and prohibiting the automatic traveling if the predetermined condition related to the operator is not satisfied.

12. An automatic traveling program for causing a work vehicle to travel automatically according to a target route in a work area,
the program for causing one or more processors:
to set a function of a detection unit that detects a detection target around the work vehicle to be enabled or disabled; and
when the function of the detection unit is set to be disabled, to enable automatic traveling if a predetermined condition related to an operator is satisfied, and to prohibit the automatic traveling if the predetermined condition related to the operator is not satisfied.

13. An automatic traveling system for causing a work vehicle to travel automatically according to a target route in a work area, the system comprising:
a setting processing portion for setting a function of a detection unit that detects a detection target around the work vehicle to be enabled or disabled; and
a traveling processing portion that, when the function of the detection unit is set to be disabled, enables automatic traveling if a predetermined condition related to an operator is satisfied, and prohibits the automatic traveling if the predetermined condition related to the operator is not satisfied.
